(19) **Europäisches Patentamt**

**European Patent Office**

**Office européen des brevets**

(11) **EP 1 125 827 B1**

(12) **EUROPEAN PATENT SPECIFICATION**

(45) Date of publication and mention
of the grant of the patent:
**12.05.2004 Bulletin 2004/20**

(51) Int Cl.⁷: **B62D 7/02**, B60K 17/30,
B62D 7/04, G05D 1/02

(21) Application number: **01300352.0**

(22) Date of filing: **16.01.2001**

(54) **Omnidirectional vehicle and method of controlling the same**

In jede Richtung fahrbares Fahrzeug und Verfahren zur Steuerung desselben

Véhicule omnidirectionnel et méthode pour le contrôler

(84) Designated Contracting States:
**DE FR GB**

(30) Priority: **17.01.2000 JP 2000007969**

(43) Date of publication of application:
**22.08.2001 Bulletin 2001/34**

(73) Proprietor: **FUJI ELECTRIC CO. LTD.**
**Kawasaki 210 (JP)**

(72) Inventor: **Wada, Masayoshi, c/o Fuji Electric Co.**
**Ltd.**
**Kawasaki-ku, Kawasaki 210 (JP)**

(74) Representative: **Bridge-Butler, Alan James et al**
**G.F. Redfern & Co.**
**Lynn House**
**Ivy Arch Road**
**Worthing, West Sussex BN14 8BX (GB)**

(56) References cited:
**US-A- 4 683 973**

EP 1 125 827 B1

## Description

The present invention relates to an omnidirectional vehicle that exhibits the so-called holonomic moving characteristics. More specifically, the present invention relates to an omnidirectional vehicle that is able to suddenly change the turning velocity thereof and the traveling direction thereof while the vehicle is turning or while the vehicle is traveling, or suddenly start traveling from the standing position thereof or while the vehicle is turning and suddenly start turning from the standing position thereof or while the vehicle is traveling to any direction from any orientation thereof without waiting for a setup time for preparing, for example, for changing the orientation of the wheels thereof. The present invention relates also to the method of controlling the omnidirectional vehicle that exhibits the holonomic moving characteristics.

The omnidirectional vehicle is a vehicle that is capable of controlling three freedoms: the traveling velocity in the traveling direction thereof, the traveling velocity in perpendicular to the traveling direction, and the angular velocity around the perpendicular axis of the vehicle. Many inventions have been disclosed so far on the omnidirectional vehicle. Omnidirectional vehicles may be classified into a non-holonomic vehicle and a holonomic vehicle.

It is necessary for the non-holonomic vehicle to conduct a setup operation for a setup time for changing the setup of a part of the mechanisms in the vehicle such as changing the orientation of each wheel to change the traveling direction of the vehicle or to shift to a turning motion. The non-holonomic vehicle is a mechanism that has three freedoms. The non-holonomic vehicle is unable to simultaneously control the three freedoms of the vehicle independently. The non-holonomic vehicle sets two of the three freedoms one by one and, finally, controls the three freedoms of the vehicle.

Therefore, the non-holonomic vehicle is unable to trace a trajectory having a right angle corner without spending a setup time. In tracing a right angle corner, the non-holonomic vehicle will trace a circular trajectory, if the vehicle does not wait for the setup time. Or, it is necessary for the non-holonomic vehicle to stop at the right angle corner and to resume traveling after the setup time has elapsed. An example of the non-holonomic vehicle is the omnidirectional vehicle that steers all the wheels thereof.

An example of such a non-holonomic vehicle is shown in US Patent 4, 683, 973 in the name of Yoshiaki Honjo and Masaharu Shioya. This patent discloses an omnidirectional vehicle according to the preamble of claim 1, having at least three wheels which can be steered in a given direction to allow the vehicle to travel in any direction, which comprises a large steering gear horizontally and rotatably mounted at a body, a motor for driving the large steering gear, steering shafts numbering the same as the wheels, extending vertically around the large steering gear and adapted to rotatably support the wheels at lower ends of the steering shafts, and small steering gears numbering the same as the steering shafts and concentrically fixed to the steering shafts, respectively, so as to mesh with the large steering gear and adapted to rotate the steering shafts upon rotation of the large steering gear to change the steering direction of the wheels. The steering shafts may be hollow shafts. The vehicle may further comprise a large drive gear horizontally and rotatably mounted on the body so as to be concentric with the large steering gear and connected to a drive motor, drive shafts inserted in holes of the hollow shafts as to be rotatably supported by the hollow shafts, small drive gears meshed with the large drive gear and concentrically fixed to the drive shafts to transmit rotational force from the large drive gear to the drive shafts, and rotational force transmitting gears for transmitting the rotational force from the drive shafts to the wheels while allowing steering of the wheels.

The omnidirectional vehicle of this invention is unable to trace a trajectory having a right angle corner without spending a setup time. Change of the traveling or moving direction of the vehicle for moderate curves can be done while the vehicle is moving. However, when the traveling direction is to be changed at an acute angle, the vehicle must be stopped.

The holonomic vehicle is able to start traveling and turning in all the directions instantaneously at an arbitrary orientation from an arbitrary position without changing the setup of the internal mechanisms thereof. The specific feature of the holonomic vehicle is that the holonomic vehicle is capable of simultaneously controlling the three freedoms independently. Examples of the holonomic vehicle include an omnidirectional vehicle that employs a spherical wheel and an omnidirectional vehicle that employs a special wheel mechanism including a large wheel and many rollers arranged around the large wheel and capable of freely rolling sidewise.

The holonomic omnidirectional vehicle disclosed by the present inventor in Japanese Patent Unexamined Publication No. Hei. 9 (1997)-164968 includes two or more driving wheel mechanisms, each including an actuator for driving a caster-type wheel and an actuator for driving the steering shaft of the caster-type wheel, and facilitates realizing an omnidirectional movement of the three freedoms. The wheel mechanism disclosed in the above identified patent application facilitates installing the ordinary tires, such as gum tires and pneumatic tires, and realizing a smooth and swift omnidirectional movement.

Since the wheel mechanism disclosed in Japanese Patent Unexamined Publication No. Hei. 9 (1997)-164968 includes the steering shaft that continuously rotates endlessly, the actuator for driving the wheel shaft and the actuator for driving the steering shaft are mounted on the body of the vehicle due to the ease of wiring. Since the rotational movements of the actuators are transmitted via rotating mechanisms such as gears, velocity interference is caused between the actuators.

More in detail, even when the actuator for driving the steering shaft is driven to change the orientation of the wheel while the actuator for driving the wheel is stopped, both the steering shaft and the wheel rotate. In contrast, when the actuator for driving the wheel is driven while the actuator for driving the steering shaft is stopped, only the wheel rotates. Thus, unidirectional velocity interference is caused from the actuator for driving the steering shaft to the actuator for driving the wheel.

To remove the velocity interference described above, it is necessary to conduct a motion control by adding in advance a predetermined rate of the rotating velocity of the steering shaft to the actuator for driving the wheel. In other words, it is necessary to employ an actuator that rotates faster than the maximum rotation frequency necessary only for driving the wheel.

Moreover, it is necessary for the actuator of the steering shaft to generate torque high enough to sustain the torque transmitted to the wheel irrespective of whether the steering shaft is rotating or not, since the torque for driving the wheel acts on the wheel via a fulcrum, that is a certain part, e.g. a gear, of the transmission mechanism of the steering shaft. This means that torque is exerted suddenly to the steering shaft while the vehicle is accelerating or decelerating or while the vehicle is climbing up or down a step. The torque is nothing but an external turbulence to the actuator for driving the steering shaft.

When an error is caused in the rotating velocity of the steering shaft by the torque from the actuator for driving the wheel, the vehicle deviates from the intended course, further causing a running error of the vehicle. This running error poses a serious problem on the omnidirectional vehicle.

Japanese Patent Unexamined Publication No. Hei. 9 (1997)-164968 includes also an omnidirectional vehicle that includes a driving unit including a caster formed of two wheels and an actuator for turning the body of the vehicle. This omnidirectional vehicle controls the translational movement and the rotational movement thereof by controlling three actuators for driving two wheels and for driving the steering shaft of the driving unit. The omnidirectional vehicle avoids the over-restricted state (the state under that the vehicle is controlled by more actuators than the number of the freedoms) of the vehicle that employs a plurality of single-wheel-type casters.

Since the actuator for driving the steering shaft is mounted on the driving unit including a caster formed of two wheels, it is necessary to drive the body of the vehicle in the direction opposite to the rotating direction of the driving unit to compensate the orientation change of the driving unit even when the vehicle is not turning, i.e. even when the vehicle is executing a simple translational movement. Therefore, it is necessary for the control calculation in the actuator for controlling the turning of the vehicle to take into account the movements of the vehicle in the direction of the translational movement. This requirement complicates the control system and it becomes necessary to mount an actuator with an extremely high capacity for turning the body of the vehicle.

In short, the interference between a plurality of actuators for driving the vehicle impairs the traveling precision of the vehicle, complicates the control system and increases the capacities of the actuators.

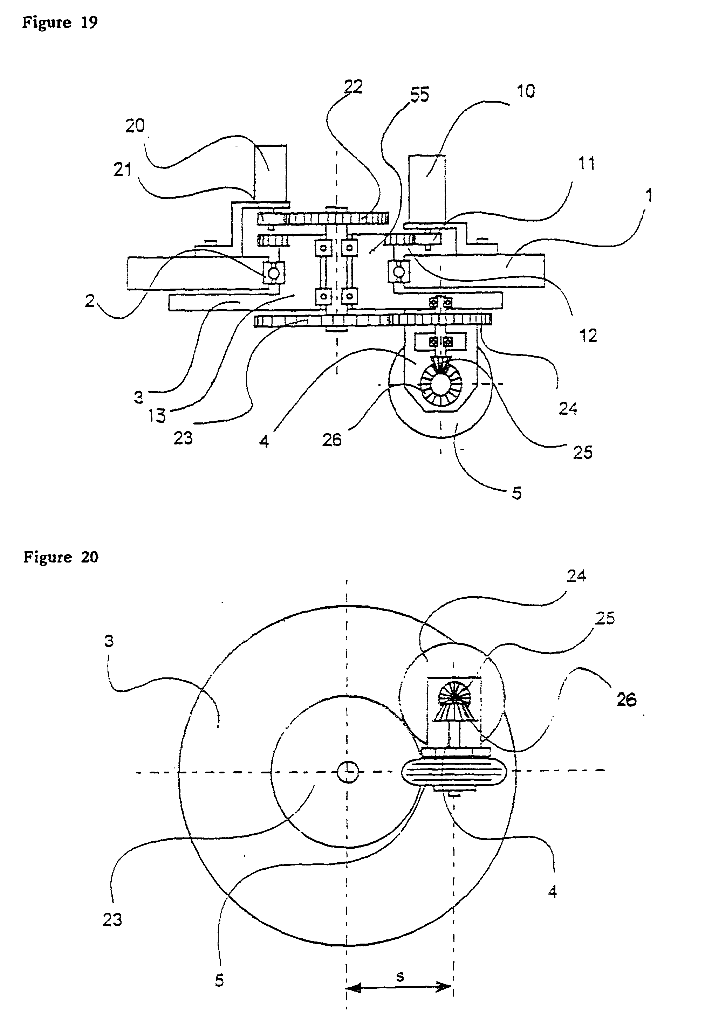

The foregoing problems will be described more in detail below with reference to Figures 19 and 20. Figure 19 is a side plan view of a conventional caster-type driving wheel mechanism. Figure 20 is a top plan view of the conventional caster-type driving wheel mechanism. The caster-type driving wheel mechanism shown in Figures 19 and 20 is a modification of the driving wheel mechanism according to an embodiment disclosed in Japanese Patent Unexamined Publication No. Hei. 9 (1997)-164968.

Referring now to these Figures, a bearing 2 rotatably supports a steering shaft 13 around the vertical axis of a body 1 of the vehicle. The steering shaft 13 includes a rotor plate 3. A driving wheel 5 is axially supported by a supporter 4 fixed to the rotor plate 3. The driving wheel 5 is positioned at the location spaced apart for an offset distance s from the center of the rotating axis of the steering shaft 13 in the rolling direction of the driving wheel 5. A motor 10 for driving the steering shaft and a motor 20 for driving the shaft of the driving wheel are mounted on the body 1 of the vehicle and fixed thereto. The motor 10 rotates the steering shaft 13 via a gear 11 on the shaft of the motor 10 and a gear 12 on the steering shaft 13. The motor 20 rotates the driving wheel 5 via a gear 21 on the shaft of the motor 20, a spur gear 22, a spur gear 23, a spur gear 24, a bevel gear 25, and a bevel gear 26.

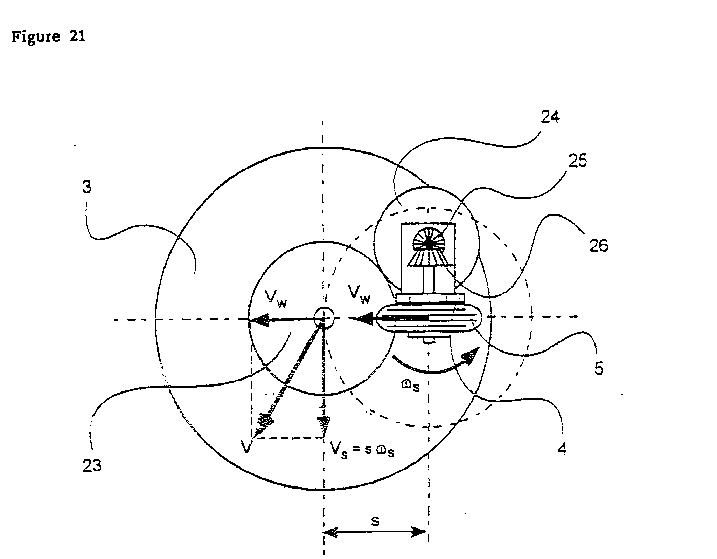

The driving wheel disclosed in Japanese Patent Unexamined Publication No. Hei. 9 (1997)-164968 behaves to generate, as shown in Figure 21, a velocity in an arbitrary direction in the horizontal plane at the center of the steering shaft, i.e. the center of the rotor plate 3 mounted on the steering shaft 13. That is, the rotation of the driving wheel 5 generates a velocity $V_w$ in the rolling direction thereof. The angular velocity $\omega_S$ of the circular motion around the ground contact point of the driving wheel 5 caused by the rotation of the steering shaft 13 generates a velocity $V_s$ in the direction perpendicular to the rolling direction of the driving wheel 13. As a result of synthesizing the velocities perpendicular to each other, a velocity V with an arbitrary magnitude and in an arbitrary direction is generated at the center of the steering shaft.

When the driving wheel 5 is driven by the motor 20 mounted on the rotor plate 3, the velocity components $V_s$ and $V_w$ are controlled independently by the motors 10 and 20, respectively. In actual wheel design, however, it is required for the steering shaft to continuously rotate multiple rounds. In most cases, both the motor 20 for driving the shaft of the driving wheel 5 and the motor 10 for driving the steering shaft 13 are mounted on the body of the vehicle due to the wiring that meets the requirement described above. When both the motors 10 and 20 are mounted on the body of the vehicle, the velocity of the motor 10 interferes with the velocity of the motor 20. The interference will be described in detail below.

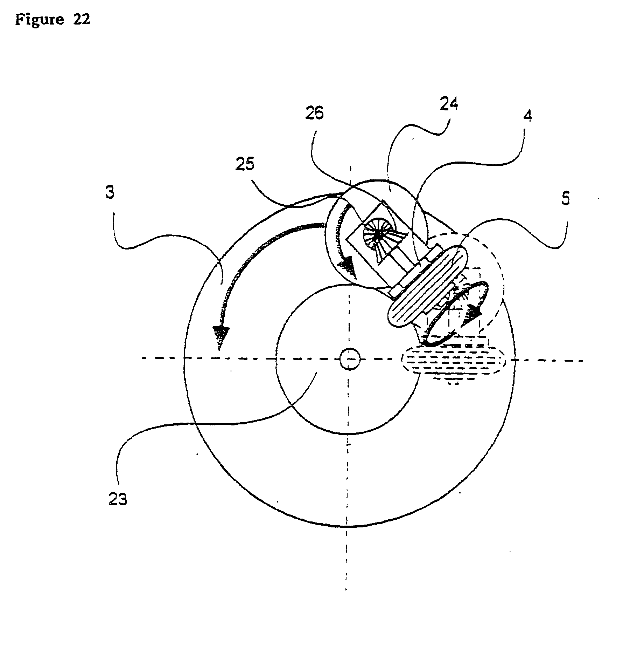

When the motor 10 is driven to rotate the rotor plate 3 anticlockwise in the plane of paper as shown in Figure 22, the wheel 5 rotates certain degrees of angle by the action of the motor 10, although the motor 20 is not rotating. This corresponds to the state, therein the gear 23 as well as the motor 20, the gear 21 and the gear 22 are not moving with respect to the body 1 of the vehicle. In other words, the gear 23, the motor 20, the gear 21 and the gear 22 are fixed to the plane of paper in Figure 22.

As the rotor plate 3 rotates, the gear 24 mounted on and fixed to the rotor plate 3 rotates around the gear 23 like a planetary gear. As a result, the gear 24 rotates certain degrees of angle with respect to the rotor plate 3, and the driving wheel 5 rotates certain degrees of angle corresponding to the rotation angle of the gear 24. This phenomenon is caused even when the motor 20 for driving the shaft of the driving wheel is rotating. A certain rate of the rotation of the rotor plate 3 is added to the rotation of the driving wheel.

The ratio of the rotation angle of the driving wheel 5 and the rotation angle of the rotor plate 3 takes a certain value determined by the reduction gear ratio of the spur gears 23, 24 and the bevel gears 25, 26. Therefore, the influence of the foregoing velocity interference may be removed by compensating the rotation of the driving wheel 5 caused by the rotation of the rotor plate 3. The rotation of the driving wheel 5 caused by the rotation of the rotor plate 3 is compensated by adding in advance a certain rate of the reference velocity value fed to the motor 10 for driving the steering shaft to the reference velocity value fed to the motor 20 for driving the shaft of the driving wheel.

The countermeasures described above for avoiding the velocity interference are indispensable for the omnidirectional vehicle disclosed in Japanese Patent Unexamined Publication No. Hei. 9 (1997)-164968 to execute the behavior as shown in Figure 21. Therefore, it is necessary for the motor 20 for driving the shaft of the driving wheel 5 to rotate faster than the maximum rotation frequency necessary solely for driving the shaft of the driving wheel, and it is necessary for the capacity of the motor 20 to be large enough.

When a part of the driving wheel 5 contacts the edge of a step while the driving wheel 5 is climbing over the step, the motor 20 for driving the shaft of the driving wheel 5 generates large torque to climb up the step. At this moment, however, the driving wheel 5 is locked momentarily and stops rotating until torque large enough to push up the vehicle will be transmitted. The torque transmitted to the driving wheel 5 acts on the rotor plate 3 via the spur gears 23 and 24 to rotate the rotor plate 3 and is transmitted further to the motor 10. As a result, an angle error is caused on the rotor plate 3 or, in the worst case, the motor 10 for driving the steering shaft is forced to rotate by the motor 20 for driving the shaft of the driving wheel.

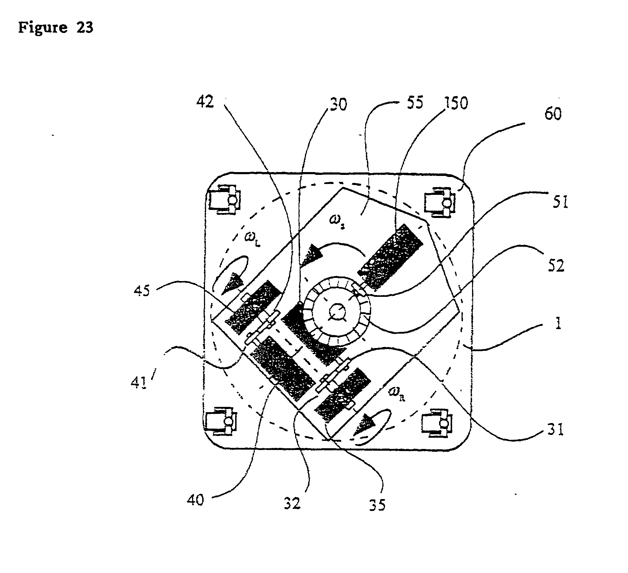

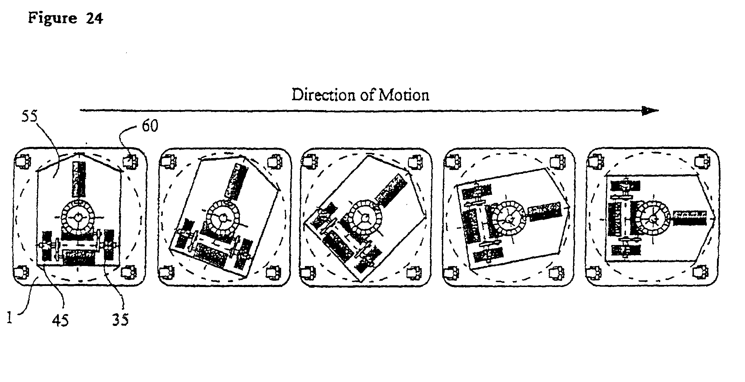

Figure 23 is a top plan view for schematically showing an omnidirectional vehicle according to another embodiment disclosed in Japanese Patent Unexamined Publication No. Hei. 9 (1997)-164968. Referring now to Figure 23, the omnidirectional vehicle, that employs a driving unit including a caster of double-wheel-type, facilitates holonomic omnidirectional traveling by three actuators. A motor 150 for driving the steering shaft mounted on a driving unit 55 rotates a body 1 of the vehicle around the driving unit 55. Figure 24 shows top plan views of the holonomic omnidirectional vehicle of Figure 23 for explaining the behavior thereof. In Figure 24, the vehicle executes a translational movement in the lateral direction from a state, therein the driving unit 55 and the body 1 displace from each other by 90 degrees of angle.

Although it is not necessary for the body 1 of the vehicle to change the orientation thereof, the body 1 changes the orientation thereof greatly, since the driving unit 55 behaves in the same manner as an ordinary caster. For compensating the influence of the rotation of the driving unit 55, the motor 150 for driving the steering shaft should rotate the body 1 of the vehicle in the opposite direction to keep the body 1 at a certain orientation.

Due to the reason described above, it is required for the motor 150 to generate a maximum velocity, that considers the rotation of the driving unit 55, by adding the maximum turning velocity of the driving unit 55 to the maximum turning velocity of the body 1. Since it is necessary to turn the entire driving unit 55, a large driving energy is required. In a vehicle powered by a battery, large electric power consumption is caused and the running time per one electrification operation is shortened.

In view of the foregoing, it is an object of the invention to provide an omnidirectional vehicle that obviates the foregoing problems. It is another object of the invention to provide an omnidirectional vehicle that facilitates removing the influence of the velocity interference between the actuators for driving the vehicle, simplifying the control system thereof, and minimizing the capacities of the motors for driving the shaft of the driving wheel and for driving the steering shaft.

More specifically, it is still another object of the invention to minimize the capacity of the motor for driving the steering shaft by preventing the external torque turbulence from being transmitted to the motor for driving the steering shaft.

It is a further object of the invention to provide an omnidirectional vehicle that facilitates reducing the dimensions thereof, the weight thereof, the costs thereof and the energy consumption thereof, the dimensions of the battery, and the weight of the battery, and elongating the time of autonomous traveling by the battery.

According to a first aspect of the invention, there is provided an omnidirectional vehicle including: a body; a driving unit fixed to said body; said driving unit including a steering shaft mounted vertically through said body, a first actuator driving said steering shaft, a driving wheel including a shaft, and a second actuator fixed to said body, said second actuator driving said shaft of said driving wheel; a bearing fixed to said body, said bearing axially supporting said steering shaft; a first power transmitting means, said first power transmitting means transmitting the power from said first actuator to said steering shaft whereby to drive said steering shaft; a second power transmitting means, said second power transmitting means transmitting the power from said second actuator to said driving wheel whereby to drive said driving wheel; a supporting means positioned below said steering shaft, said supporting means axially supporting said driving wheel via a bearing, in which a section of the second power transmitting means is linked to the steering shaft such that the driving wheel is driven when the first actuator drives said steering shaft and said second actuator is stopped, characterised in that, a line passing through the driving wheel axis is normal to a plane passing through the vertical axis of the steering shaft, and said driving wheel is located on said line at a point which is spaced apart from said plane by a first pre-determined distance (d), and the vertical axis of the steering shaft is located in said plane at a point which is spaced apart from said line by a second pre-determined distance (s), the pre-determined distances (d) and (s) and the first and second power transmitting means being such that when the first actuator drives said steering shaft and said second actuator is stopped, the driving velocity of the wheel is such that distances (s) and (d) are maintained so that said line passing through the shaft of the driving wheel does not cross the vertical axis of the steering shaft.

Advantageously, said second power transmitting means comprises a first transmission section A moved by said second actuator independently of said steering shaft; and a second transmission section B linked to said first transmission section A and linked to said steering shaft such that said second transmission section B is movable around said vertical axis of the steering shaft; said second transmission section B having a reduction gear ratio G, said G, the radius r of said driving wheel and said first pre-determined distance (d) being related according to the formula:

$$d = r/G$$

said G of more than one indicating deceleration.

The configuration described above facilitates avoiding the interference between the behaviors of the actuator for driving the steering shaft and the actuator for driving the shaft of the driving wheels. Since the driving wheel is offset from the center of the body of the vehicle, the power transmission mechanism is simplified, constructed easily and arranged easily.

Advantageously, said supporting means comprises a steering shaft connector connected and fixed to said steering shaft, a gear axially supported by said steering shaft connector, and a support link axially supported on the rotation axis of said gear rotatably in a vertical plane, said support link axially supporting said driving wheel; said second transmission section B, including a gear for driving said driving wheel, and being coupled to said gear supported by said steering shaft connector, said second transmission section B being moveable around said vertical axis of the steering shaft; and a vibration absorber between said steering shaft and said support link, for absorbing vibrations caused while said driving wheel is running on the ground.

Since the above described configuration facilitates making the driving wheel always touch the ground even when the ground is not flat, sufficient driving force is obtained, the vehicle is stabilized and the running performance of the vehicle is improved especially when the vehicle includes a plurality of the driving wheel.

Advantageously, said vibration absorber comprises a spring; and said vehicle further includes a vehicle weight measuring means for measuring the total weight of said vehicle including the load thereof or the center of gravity of said vehicle including the load thereof; said vehicle weight measuring means comprising a linear position sensor disposed in parallel to said spring, said linear position sensor including a potentiometer of linear driving type, said linear position sensor measuring the deformation of said spring so as to measure the vertical reactive force exerted on said driving wheel.

By measuring the deformation of the suspension spring for each driving wheel, the total weight or the center of gravity of the vehicle is estimated and the vehicle is further stabilized.

Advantageously, said vehicle further comprises a rotatable rod inserted through the center of said steering shaft, said rotatable rod moving up and down in response to the displacement of said vibration absorber in use; and a linear position sensor disposed on a portion of said vehicle, said portion being not rotated by the movement of said steering shaft, said linear position sensor including a potentiometer of linear driving type, said linear position sensor measuring the displacement of said rotatable rod so as to measure the deformation of said vibration absorber.

Since it is possible to dispose the sensor for measuring the deformation of the suspension spring on the body of the vehicle, it becomes unnecessary to arrange the wiring on the rotating portions and the reliability of the measuring system is improved.

According to a second aspect of the invention, there is provided the method of controlling an omnidirectional vehicle including a plurality of the driving units described above, characterised in that said method comprises: defining vehicle-based-coordinates, an origin thereof being set at a reference point of said vehicle; and controlling the angular rotating velocity of said first actuator in each of said driving units and the angular rotating velocity of said second actuator in each of said driving units based on the following equations;

$$\omega_{mwi} = (G_{w}/r)\{v_{vx} \cos\theta_{wi} + v_{vy} \sin\theta_{wi} + \omega_v(x_i \sin\theta_{wi} - y_i \cos\theta_{wi})\}$$

$$\omega_{msi} = (G_{s}/s)\{-v_{vx} \sin\theta_{wi} + v_{vy} \cos\theta_{wi} + \omega_v(x_i \cos\theta_{wi} + y_i \sin\theta_{wi})\}$$

wherein, $\omega_{mwi}$ is the angular rotating velocity of said second actuator for driving said shaft of said driving wheel of the i-th driving unit,

$\omega_{msi}$ is the angular rotating velocity of said first actuator for driving said steering shaft of the i-th driving unit,

$v_{vx}$ is the velocity of said vehicle along the x-axis,

$v_{vy}$ is the velocity of said vehicle along the y-axis,

$\omega_v$ is the angular rotating velocity of said vehicle around said reference point,

r is the radius of said driving wheel,

s is being the horizontal distance between said steering shaft and said shaft of said driving wheel in the traveling direction of said driving wheel,

$x_i$ is the x-axis of coordinate on said vehicle-based coordinates of the location of said steering shaft in the i-th driving unit,

$y_i$ is the y-axis of coordinate on said vehicle-based coordinates of the location of said steering shaft in the i-th driving unit,

$\theta_{wi}$ is the orientation of said driving wheel in the i-th driving unit on said vehicle-based coordinates,

$G_s$ is the reduction gear ratio of said first power transmitting means of said first actuator for driving said steering shaft; and

$G_w$ is the reduction gear ratio of said second power transmitting means of said second actuator for driving said shaft of said driving wheel.

Since each actuator is controlled completely independently by the method described above without considering the behaviors of the other driving mechanisms, the mechanism and the software of each driving unit may be summarized into a module more easily and, therefore, the driving unit may be designed more freely.

Advantageously, the method further comprises: detecting the rotation angle around said vertical steering shaft axis passing through the vehicle by a sensor disposed on said body of said vehicle, said sensor including a gyroscope; and adding the detected rotation angle to the data stored so far of the orientation of said body of said vehicle, so as to correct errors in the stored data of the orientation of said body of said vehicle.

According to a third aspect of the invention, there is provided an omnidirectional vehicle including: a body; a driving set mounted on said body, said driving set comprising: a plurality of driving units, each comprising a steering shaft mounted vertically through each driving unit and a driving wheel including a shaft; a first actuator, said first actuator driving said steering shafts of said driving units collectively via a first power transmitting means including a belt or a chain; a second actuator, said second actuator driving said driving wheels of said driving units via a second power transmitting means; a bearing mounted on said driving set, said bearing supporting said body rotatably around a vertical axis passing through said vehicle; a third actuator mounted on said driving set, said third actuator rotating said body around said vertical axis passing through said vehicle; a third power transmitting means mounted on said driving set, said third power transmitting means transmitting the power from said third actuator; a supporting means positioned below each of said steering shafts, said supporting means axially supporting said driving wheels via a bearing; in which a section of the power transmitting means is linked to the steering shafts in each driving unit such that the driving wheel is driven when the first actuator drives said steering shafts and said second actuator is stopped, characterised in that in each of said driving units a line passing through the driving wheel axis is normal to a plane passing through the vertical axis of the steering shaft, and said driving wheel is located on said line at a point which is spaced apart from said plane by a first pre-determined distance (d), and the vertical axis of the steering shaft is located in said plane at a point which is spaced apart from said line by a second pre-determined distance (s), the pre-determined distances (d) and (s) and the first and second power transmitting means being such that when the first actuator drives said steering shaft and said second actuator is stopped, the driving velocity of the wheel is such that distances (s) and (d) are maintained so that said line passing through the shaft of the driving wheel does not cross the vertical axis of the steering shaft.

Advantageously, the four driving units are provided in a square formation, and in which the driving wheels of one pair of diagonally opposed driving units are positioned on a first side of the steering shaft, and the driving wheels in the other pair of diagonally opposed driving units are positioned on the opposite side of the steering shaft, so as to relax the interference caused by external torque turbulence between said driving wheels and the ground, thereon said vehicle is running.

According to a fourth aspect of the invention, there is provided the method of controlling the omnidirectional vehicle described above, characterised in that: said method comprises: defining vehicle-based-coordinates, an origin thereof being set at a reference point of said vehicle; and controlling the angular rotating velocity of said first actuator, the angular rotating velocity of said second actuator, and the angular rotating velocity of said third actuator based on the following equations to control the directions and the velocities of the translational movements of said driving units and said body and the orientation of said body,

$$\omega_{mw} = (G_{w}/r)\,(v_{vx}\cos\theta_{w} + v_{vy}\sin\theta_{w})$$

$$\omega_{ms} = (G_{s}/s)\,(-v_{vx}\sin\theta_{w} + v_{vy}\cos\theta_{w})$$

$$\omega_{mr} = G_{r}\omega_{v}$$

wherein, $v_{vx}$ is the velocity of said vehicle along the x-axis,
$v_{vy}$ is the velocity of said vehicle along the y-axis,
$\omega_{v}$ is the angular rotating velocity of said vehicle around said reference point,
$\omega_{mw}$ is the angular rotating velocity of said second actuator for driving said shafts of said driving wheels,
$\omega_{ms}$ is the angular rotating velocity of said first actuator for driving said steering shafts,
$\omega_{mr}$ is the angular rotating velocity of said third actuator for driving said body of said vehicle,
$r$ is the radius of said driving wheels,
$s$ is the horizontal distance between each steering shaft and each shaft of each driving wheel in the traveling direction of each driving wheel,
$\theta_{w}$ is the orientation of said driving wheels on said vehicle-based coordinates,
$G_{s}$ is the reduction gear ratio of said first power
transmitting means for driving said steering shafts,
$G_{w}$ is the reduction gear ratio of said second power transmitting means for driving said shafts of said driving wheels, and
$G_{r}$ is the reduction gear ratio of said third power transmitting means for rotating said body of said vehicle.

By the configuration and the controlling method described above that drive the driving wheels with one single actuator and the steering shafts with one single actuator, the vehicle is driven with a necessary but minimum number of actuators and the manufacturing costs of the vehicle are reduced. Since the interference of the translational movement and the rotational of the vehicle is avoided, the load of the control system and the dimensions of the actuator for turning the vehicle are reduced.

Advantageously, the foregoing $\theta_{w}$ is measured by an angle measuring means comprising an angle detector fixed to said body of said vehicle, the shaft of said angle detector is rotated by said first power transmitting means of said first actuator for driving said steering shafts.

Advantageously, said angle measuring means includes a first integrating encoder, that detects the rotation of the shaft of said first actuator; a second integrating encoder, that detects the rotation of the shaft of said third actuator; an absolute encoder, that detects the orientation of said driving wheels with respect to said body of said vehicle with a relatively low resolution; and a differential counter, that counts the number of pulses contained in a first pulse train from said first integrating encoder and the number of pulses contained in a second pulse train from said second integrating encoder; said first pulse train indicates the normal rotation or the reverse rotation of said first actuator; said first pulse train is inputted to the positive input of said differential counter; said second pulse train indicates the normal rotation or the reverse rotation of said second actuator; said second pulse train is inputted to the negative input of said differential counter; said differential counter subtracts said number of pulses contained in said second pulse train from said number of pulses contained in said first pulse train; said differential counter outputs the result of the subtraction; said angle measuring means uses the output of said differential counter for the lower place bits and the output of said absolute encoder for the upper place bits; and said angle measuring means connects said lower place bits and said upper place bits, whereby to obtain the measured relative angle value between the orientations of said vehicle and said driving wheel.

The above described method, that mounts an absolute encoder with a relatively low resolution on one shaft driven by two actuators and corrects the value from the absolute encoder by hardware, i.e. two integrating encoders mounted on the actuators, facilitates angle detection with a high precision by cheap sensors without increasing the load of the software.

Since the relative positional relations between said driving wheel and said steering shaft in the adjacent driving units are opposite to each other to relax the interference caused by external torque turbulence between said driving wheels and the ground, thereon the vehicle is running, this extinguishes or moderates the external turbulent torque caused from the ground and the steps by the power transmission mechanisms, facilitates reducing the adverse effects of the external turbulent torque to the actuators and the capacities of the actuators.

Advantageously, the method further comprises: detecting the slip between said driving wheels and the ground based on the output of a sensor disposed on said driving set, said sensor detecting the rotation around the vertical axis of said vehicle, said sensor including a gyroscope; and correcting the measured relative angle value between the orientations of said driving wheels and said body of said vehicle based on the detected slip value.

Since the above described method facilitates detecting only the orientation error of the vehicle, the algorithm for detecting the orientation of the vehicle is greatly simplified. Since the above described method facilitates using a rotation measuring system with a low measuring range and a high sensitivity, the measurement and control of the orientation of the vehicle may be conducted with a higher precision than that of the similar conventional system.

Advantageously, the method further comprises: detecting the rotation angle around a vertical axis passing through said vehicle by a sensor disposed on said body of said vehicle, said sensor including a gyroscope; and adding the detected rotation angle to the data stored so far of the orientation of said body of said vehicle so as to correct errors in the stored data of the orientation of said body of said vehicle.

Therefore, according to the invention, the interference between the control system and the driving system is avoided, the control system and the driving system are simplified, and the capacities of the actuators and the electric power consumption are reduced. The vehicle according to the invention is a practical holonomic omnidirectional vehicle that reduced the manufacturing costs, and exhibits a high reliability and a very precise running capability.

Now the invention will be described hereinafter with reference to the accompanied drawing figures which illustrate the preferred embodiments of the invention; in which:

Figure 1 is a side plan view of an omnidirectional vehicle according to the first embodiment of the invention;
Figure 2 is a top plan view of the omnidirectional vehicle of Figure 1;
Figure 3 is a top plan view of the omnidirectional vehicle of Figures 1 and 2 for explaining the principle of behavior thereof;
Figure 4 is another top plan view of the omnidirectional vehicle of Figures 1 and 2 for explaining the principle of behavior thereof;
Figure 5 is a top plan view of the driving wheel and the steering shaft for explaining the equations according to the first embodiment of the invention;
Figure 6 is a side plan view of an omnidirectional vehicle according to the second embodiment or the third embodiment of the invention;
Figure 7 is a bottom plan view of the omnidirectional vehicle of Figure 6;
Figure 8 is a side plan view of an omnidirectional vehicle according to the fourth embodiment of the invention;
Figures 9(a) through 9(c) are side plan views for explaining the behavior of the slider in the omnidirectional vehicle of Figure 8;
Figures 10(a) and 10(b) are velocity vector diagrams for explaining the behavior of an omnidirectional vehicle according to the fifth embodiment of the invention;
Figure 11 is a top plan view of an omnidirectional vehicle according to the sixth embodiment of the invention;
Figure 12 is a side plan view of an omnidirectional vehicle according to the seventh embodiment of the invention;
Figure 13 is a block diagram of a control system according to the eighth embodiment of the invention for controlling the omnidirectional vehicle according to the seventh embodiment;
Figure 14(a) is a top plan view of the omnidirectional vehicle for explaining the operation of the system of Figure 13;
Figure 14(b) is another top plan view of the omnidirectional vehicle for explaining the operation of the system of Figure 13;

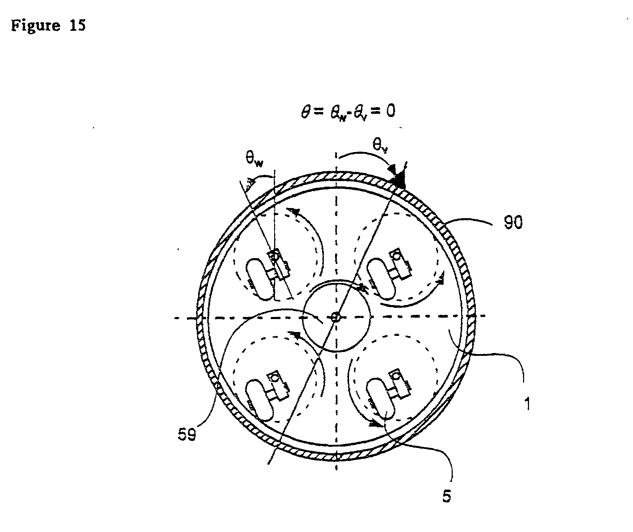

Figure 15 is still another top plan view of the omnidirectional vehicle for explaining the operation of the system of Figure 13;
Figure 16 is a top plan view of an omnidirectional vehicle according to the ninth embodiment of the invention;
Figure 17 shows top plan views for explaining the behavior of an omnidirectional vehicle according to the tenth embodiment of the invention;

Figure 18 is a block diagram of a control system for controlling the omnidirectional vehicle according to the eleventh embodiment of the invention;

Figure 19 is a side plan view of a conventional caster-type driving wheel mechanism, that is a modification of an omnidirectional vehicle according to an embodiment disclosed in Japanese Patent Unexamined Publication No. Hei. 9 (1997)-164968;

Figure 20 is a top plan view of the conventional caster-type driving wheel mechanism;

Figure 21 is a velocity vector diagram on the conventional caster-type driving wheel mechanism;

Figure 22 is a top plan view of the caster-type driving wheel mechanism for explaining the behavior thereof;

Figure 23 is a top plan view for schematically showing a holonomic omnidirectional vehicle according to another embodiment disclosed in Japanese Patent Unexamined Publication No. Hei 9 (1997)-164968.

Figure 24 shows top plan views of the holonomic omnidirectional vehicle of Figure 23 for explaining the behavior thereof.

Referring now to the Figures, a bearing 2 rotatably supports a steering shaft 13 around the vertical axis of a body 1 of the vehicle. The steering shaft 13 includes a rotor plate 3. A driving wheel 5 is axially supported by a supporter 4 fixed to the rotor plate 3. The driving wheel 5 is positioned at the location spaced apart for an offset distance s from the center of the rotating axis of the steering shaft 13 in the rolling direction of the driving wheel 5 and spaced apart for an offset distance d from the center of the rotating axis of the steering shaft 13 in the direction perpendicular to the rolling direction of the driving wheel 5, i.e. in the direction of the rotating shaft of the driving wheel 5. A motor 10 for driving the steering shaft 13 and a motor 20 for driving the shaft of the driving wheel 5 are fixed to the body 1 of the vehicle.

The motor 10 rotates the rotor plate 3 via a spur gear 11 on the shaft of the motor 10 and a spur gear 12 on the steering shaft. The motor 20 rotates the driving wheel 5 via a gear 21 on the shaft of the motor 20, a spur gear 22, a spur gear 23, a spur gear 24, a bevel gear 25, and a bevel gear 26.

When the motor 10 is driven to rotate while the motor 20 is stopped, the rotor plate 3 rotates. Since the spur gear 24 rotatably fixed to the rotor plate 3 rotates around the spur gear 23 like a planetary gear, the spur gear 24 rotates with respect to the rotor plate 3. As a result, the driving wheel 5 rotates.

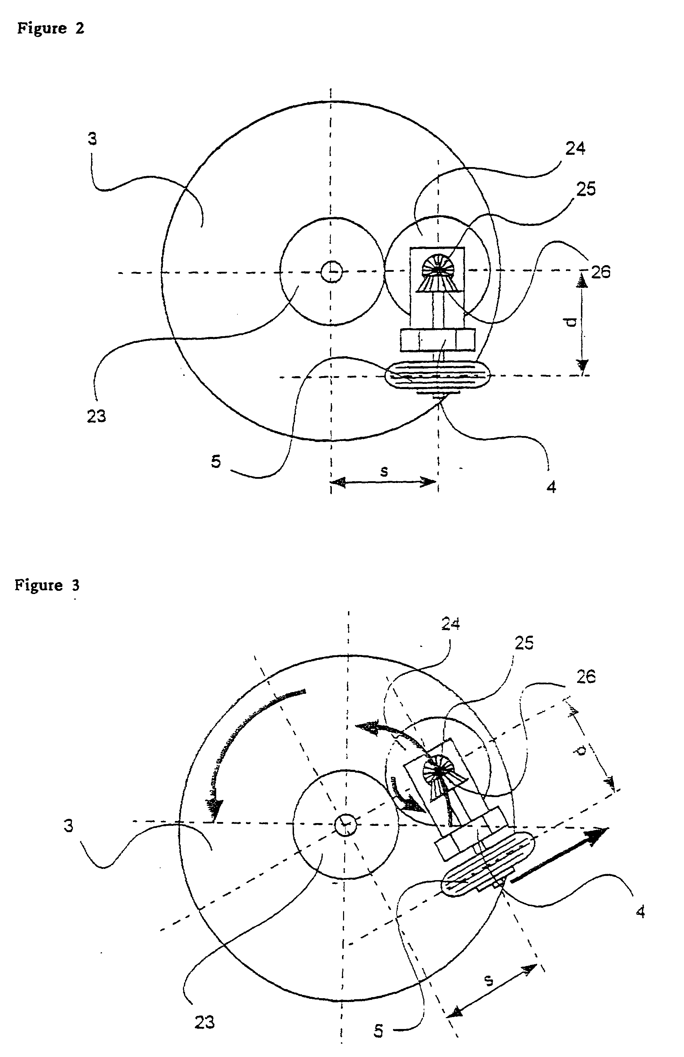

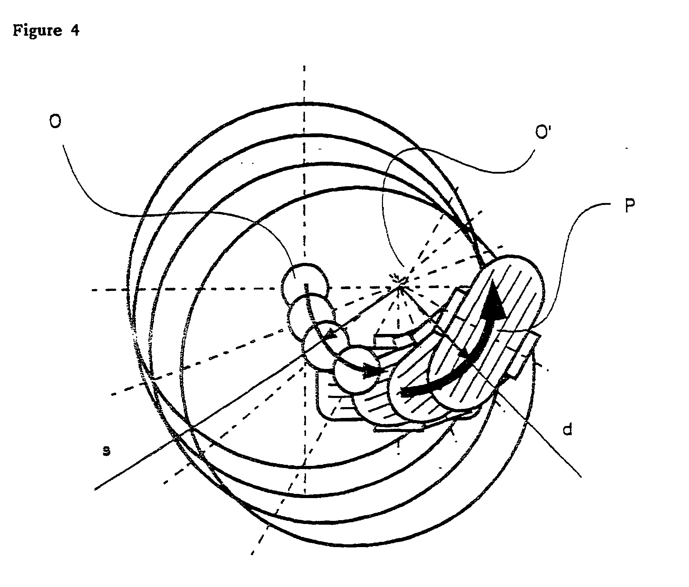

Although the motor 20 for driving the shaft of the driving wheel is not rotating, the driving wheel 5 rotates and moves to the right hand side of the plane of paper when the rotor plate 3 is rotated anticlockwise on the plane of paper as shown in Figures 3 and 4. By adjusting the offset distance d, the traveling distance of the driving wheel 5 on the ground due to the rotation thereof, caused by the velocity interference with respect to the change of the orientation of the driving wheel 5 caused by the rotation of the motor 10, is optimized at a value, at that the velocity interference described above is avoided. More specifically, by adjusting the offset distance d at a value, at that the driving wheel rolls on the points spaced apart for the offset distance s from the steering shaft, that is on the circle, the center thereof is located at the point O' and the radius thereof is d, the center O of the steering shaft moves on the circle, the center thereof is located at the point O' and the radius thereof is s.

The movement, thereat Japanese Patent Unexamined Publication No. Hei. 9 (1997)-164968 has aimed, is realized and the velocity interference of the motors 10 and 20 is avoided by the wheel mechanism described above, since any velocity vector pointing to the rolling direction of the driving wheel 5 is not generated at the point O as far as the motor 20 for driving the shaft of the driving wheel is not rotated.

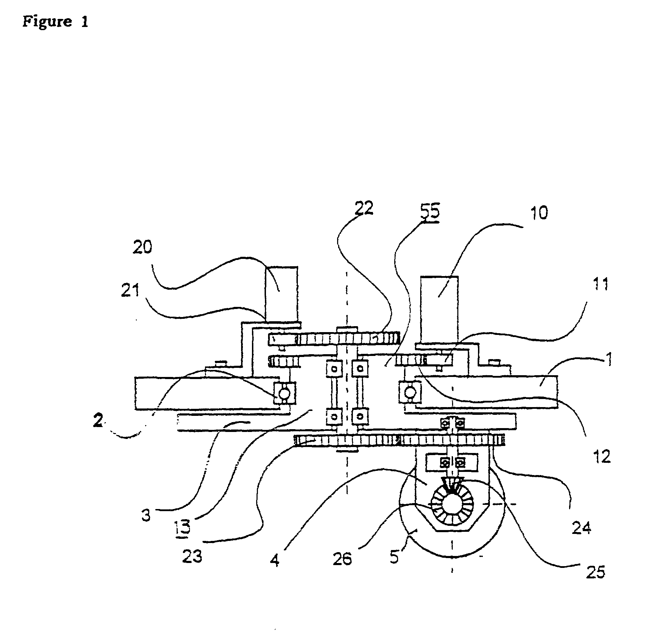

Now the method of determining the rolling direction of the driving wheel 5 and the offset distance d will be explained described below. The rolling direction of the driving wheel 5 is determined by the gear configuration and the orientation of the driving wheel 5 with respect to the steering shaft. As described above, the driving wheel 5 in the arrangement described with reference to Figures 1 and 2 turns and moves to the right hand side of the plane of paper while changing the orientation thereof anticlockwise as shown in Figure 4 when the rotor plate 3 is turned anticlockwise on the plane of paper. There exists an important relation between the turning direction of the driving wheel 5 and the momentary traveling direction of the driving wheel 5 with respect to the ground.

As shown in Figure 4, the driving wheel 5 has to move to the right hand side when driving wheel 5 turns anticlockwise. The turning direction is inverted, for example, by inserting a spur gear as an idler between the spur gears 23 and 24.

The offset distance d is adjusted by making the turning center of the driving wheel 5 coincide with the point O'. The reduction gear ratio G from the gear 23 to the wheel 5 is expressed by the following equation (1) that relates the effective radiuses $r_{23}$ through $r_{26}$ of the gears 23 through 26 with each other. The reduction gear ratio G of more than 1 indicates deceleration.

$$G = (r_{24}/r_{23}) \times (r_{26}/r_{25}) \tag{1}$$

Now we consider the case, wherein only the actuator 10 for driving the steering shaft is driven to rotate the rotor plate 3. When the rotor plate 3 rotates for a rotation angle $\theta_s$, the spur gear 24 rotates around the not rotating spur gear 23 for the angle $\theta_s$ like a planetary gear. When the spur gear 24 rotates for the angle $\theta_s$, the spur gear 24 rotates around the point O' for an angle $\theta_{23}$, that is expressed by the following equation (2).

$$\theta_{23} = (r_{23}/r_{24}) \theta_s \tag{2}$$

If the driving wheel 5 rotates for an angle $\theta_w$ when the spur gear 24 rotates around the point O' for the angle $\theta_{23}$, the angle $\theta_w$ is expressed by the following equation (3) and the traveling distance **a** of the driving wheel 5 by the following equation (4).

$$\theta_w = (r_{25}/r_{26})\theta_{23} \tag{3}$$

$$a = r\theta_w \tag{4}$$

Here, r is the radius of the driving wheel 5.

By inserting the equations (1) through (3) into the equation (4), the following equation (5) is obtained.

$$a = (r/G) \theta_s \tag{5}$$

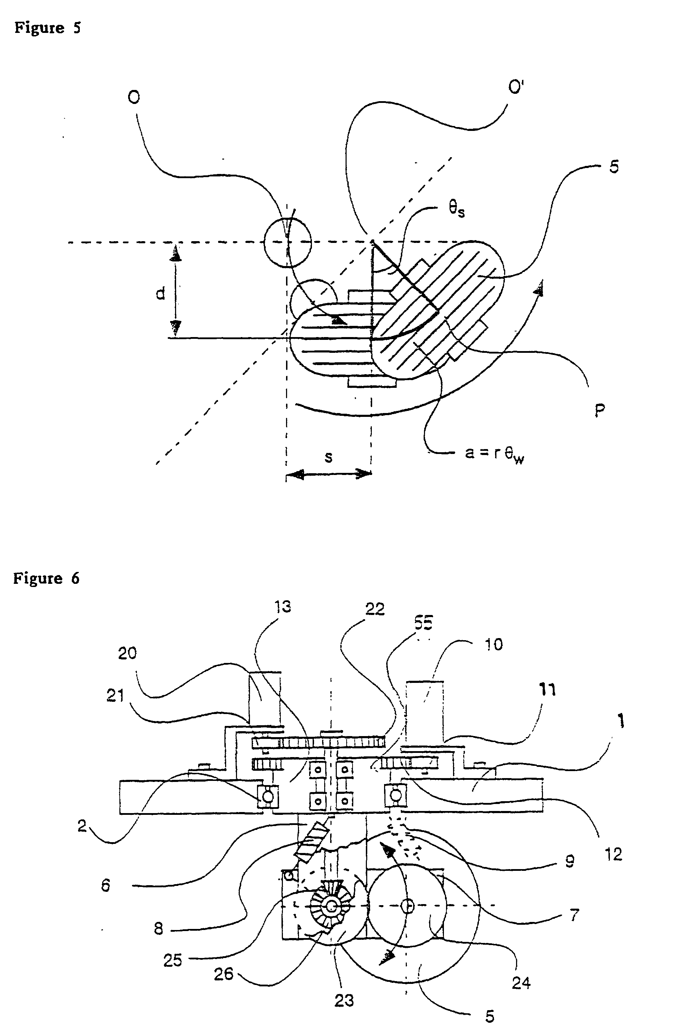

To make the driving wheel 5 roll on the circle, the center thereof is located at the point O' and the radius thereof is d, it is necessary to meet the relation between $\theta_w$ and $\theta_s$ as shown in Figure 5. The condition, under that the arc, the radius thereof is d, and the traveling distance of the driving wheel 5 are equal to each other, is expressed by the following equation (6).

$$d \theta_s = a \tag{6}$$

The offset distance d derived by eliminating $\theta_s$ from the equations (5) and (6) is expressed by the following equation (7).

$$d = r/G \tag{7}$$

When the distance **d** is adjusted at the value that meets the condition described above, the driving wheel 5 turns on the circle, the center thereof is located at the point O' and the radius thereof is d, by the rotation of the steering shaft caused only by driving the motor 10, and the center of the steering shaft, i.e. the point O, turns on the circle, the center thereof is located at the point O' and the radius thereof is **s**. Due to the movements of the driving wheel and the steering shaft described above, the steering shaft is able to generate thereat a velocity perpendicular to the rolling direction of the driving wheel. When the motor 20 is driven, only the driving wheel rotates, and the steering shaft generates a velocity in the rolling direction of the driving wheel. Since velocities perpendicular to each other are generated on the steering shaft only by driving the motor 10 and only by driving the motor 20 respectively, the steering shaft is moved to all the directions by controlling the drive of the motor 10 and the drive of the motor 20 independently irrespective of the orientation of the driving wheel.

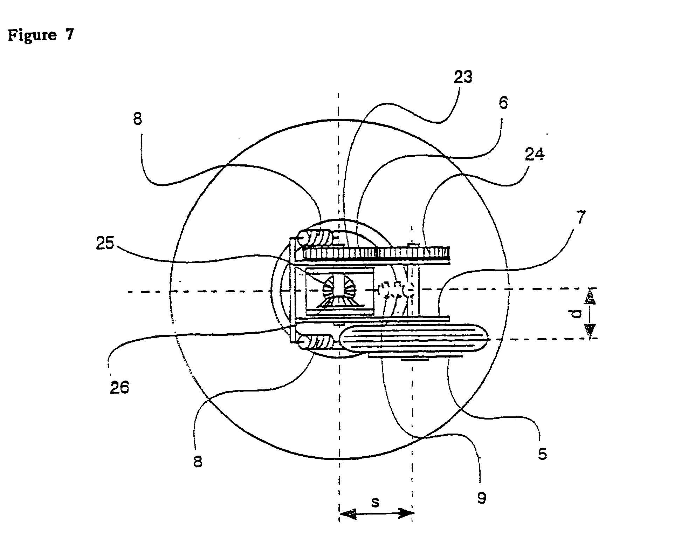

Figure 6 is a side plan view of a holonomic omnidirectional vehicle according to a second embodiment or a third embodiment of the invention. Figure 7 is a bottom plan view of the holonomic omnidirectional vehicle of Figure 6.

Referring now to these Figures, the arrangements of the spur gears 23 and 24 and the arrangements of the bevel gears 25 and 26 on the power transmission path are opposite to the arrangements in the first embodiments. This configuration provides a dimensional leeway for moving up and down the driving wheel 5, since not only the spur gears may be arranged in a vertical plane but also the shaft driven by the gear 22 may be extended from the center of the steering shaft 13 to the height near to the center of the driving wheel 5 and, therefore, it becomes unnecessary to dispose a gear and such a mechanism above the driving wheel 5.

According to the second embodiment, a support link 7 supports the spur gear 24 and the driving wheel 5. The support link 7 is separated from the steering shaft connector 6 fixed to the steering shaft 13. The support link 7 is supported rotatably around the spur gear 23 and the bevel gear 26. Moreover, an extension spring 8 is inserted between the portion of the support link 7 opposite to the portion thereof on the side, thereon the driving wheel 5 is arranged, and the steering shaft 13 such that a force, that pushes the driving wheel 5 to the ground, is generated.

When a compression spring 9 is employed alternatively, the spring 9 is inserted between the portion of the support link 7, thereon the driving wheel 5 is arranged, and the steering shaft 13 such that a force, that pushes the driving wheel 5 to the ground, is generated. A damper may be used together with the spring 8 or 9. The vibration absorbing capability and the ground contact capability of the suspension mechanism constructed as described above is changed by adjusting the spring constant and the viscosity coefficient.

The wheel mechanism in the omnidirectional vehicle according to the second embodiment includes suspensions, each independently suspending each wheel. The suspension moves up and down the pertinent driving wheel in response to the unevenness of the ground. The spring in the suspension sustains the vertical reactive force exerted to the driving wheel and deforms in proportion to the reactive force. Therefore, the vertical reactive force exerted to the driving wheel is measured by detecting the deformation of the spring in the suspension.

The deformation of the spring is detected by a potentiometer and such a simple sensor not shown in Figure 6 that detects a linear deformation. The total weight of the vehicle including the weight of the load that the vehicle is carrying is estimated by examining the data from the sensors for the respective driving wheels. The location of the center of gravity is estimated from the distribution of the force measured by the sensors.

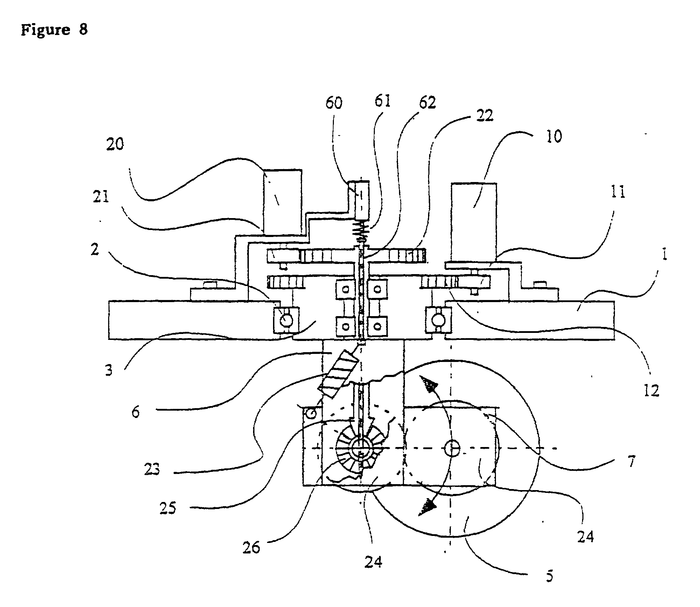

The omnidirectional vehicle according to the third embodiment includes sensors mounted on the springs for measuring the vertical reactive forces exerted to the driving wheels 5. The sensor that should be mounted on the portion, that rotates as the driving wheel 5 rotates, poses a wiring problem. To obviate the wiring problem, a rotatable rod 62 is inserted into the steering shaft as shown in Figure 8, and the deformation of the spring is measured by detecting the displacement of the rotatable rod 62.

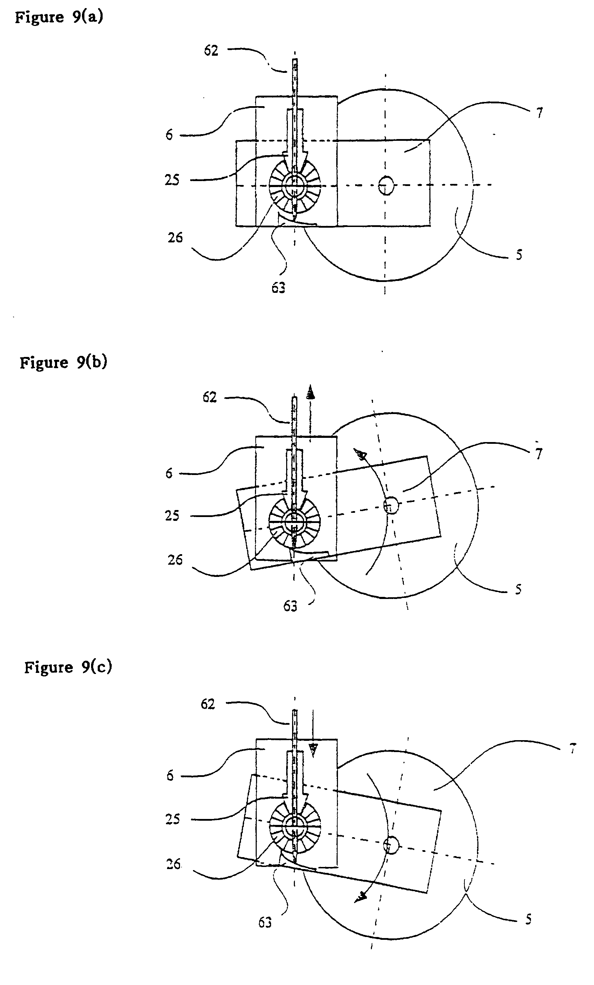

A spring 61 on the top of the rotatable rod 62 always presses the rotatable rod 62 downward. The deformation of the spring 61 is detected by a linear displacement measuring instrument 60 such as a liner potentiometer fixed to the body 1 of the vehicle. The tip of the rotatable rod 62 contacts with a slider 63 as shown in Figures 9(a) through 9(c) so that the rotatable rod 62 may be moved up and down by the rotation of the suspension mechanism. The rotatable rod 62 rises when the driving wheel 5 moves up toward the body 1 of the vehicle as shown in Figure 9(b) and lowers when the driving wheel 5 moves down away from the body 1 of the vehicle as shown in Figure 9(c).

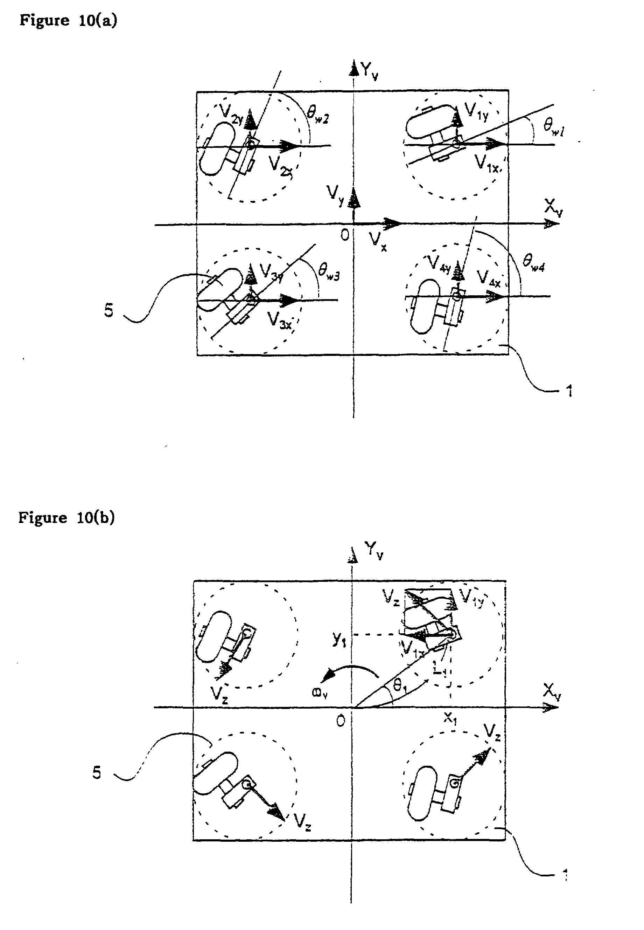

Figures 10(a) and 10(b) are velocity vector diagrams for explaining the behavior of an omnidirectional vehicle according to a fifth embodiment of the invention. The omnidirectional vehicle according to the fifth embodiment includes two or more driving units described with reference to Figures 1 through 3. The omnidirectional vehicle shown in Figures 10(a) and 10(b) exemplarily includes four driving units.

The origin of vehicle-based coordinates is set imaginarily at the control reference point of the vehicle. The location of the center of the steering shaft of the i-th driving unit is defined by $x_i$ and $y_i$. When the vehicle executes a translational movement at the velocity component $v_{vx}$ along the x-axis and the velocity component $v_{vy}$ along the y-axis without including any turning movement, it is required for the velocity components of each driving unit along the x-and y-axes to be the same with the velocity components of the vehicle as described in the following equations (8) independently of the location $(x_i, y_i)$ thereof.

$$v_{ix} = v_{vx \ (i = 1, 2...)}$$

$$v_{iy} = v_{vy \ (i = 1, 2...)} \tag{8}$$

When the vehicle executes a stationary turning movement (a turning movement without accompanying any translational movement) at an angular velocity $\omega_v$ around the reference point O as shown in Figure 10(b), the velocity components $v_{ix}$ and $v_{iy}$ required for each driving unit is expressed by the following equations (9).

$$v_{ix} = \overline{\phantom{-}} L_i \omega_v \sin\theta_{i \ (i = 1, 2...)}$$

$$v_{iy} = L_i \omega_v \cos\theta_{i \ (i = 1, 2...)} \tag{9}$$

As shown in Figure 10(b), $L_i$ is the distance between the reference point of the vehicle and the center of the steering shaft of the i-th driving unit and $\theta_i$ is the angle of the line drawn from the origin of the vehicle-based coordinates and the center of the steering shaft of the i-th driving unit. Due to the geometrical condition, the following equations (10) are derived from the description in Figure 10(b).

$$L_i \cos\theta_i = x_{i\,(i = 1, 2...)}$$

$$L_i \sin\theta_i = y_{i\,(i = 1, 2...)} \tag{10}$$

By substituting the equations (10) into the equations (9) to eliminate $L_i$ and $\theta_i$, the following equations (11) are obtained.

$$v_{ix} = \overline{\phantom{a}}\omega_v\, y_{i\,(i = 1, 2...)}$$

$$v_{iy} = \omega_v\, x_{i\,(i = 1, 2...)} \tag{11}$$

When the vehicle executes the translational movement and the turning movement described above, it is required for the velocity components of each driving unit to be the sums of the equations (8) and the equations (9). By adding the right hand sides of the equations (8) and (9), the velocity components $v_{ix}$ and $v_{iy}$ along the x-and y-axes required for the vehicle to conduct an arbitrary translational movement accompanying an arbitrary rotational movement are expressed by the following equations (12).

$$v_{ix} = v_{vx} \overline{\phantom{a}}\omega_v\, y_{i\,(i = 1, 2...)}$$

$$v_{iy} = v_{vy} + \omega_v\, x_{i\,(i = 1, 2...)} \tag{12}$$

The velocity $v_{wix}$ in the traveling direction of the driving wheel 5 of each driving unit and the velocity $v_{wiy}$ in perpendicular to the traveling direction of the driving wheel 5 of each driving unit are expressed by the following equations (13) derived by applying rotational transformations on the velocities expressed by the equations (12) described on the vehicle-based coordinates.

$$v_{wix} = v_{ix} \cos\theta_{wi} + v_{iy} \sin\theta_{wi}$$

$$= v_{vx} \cos\theta_{wi} + v_{vy} \sin\theta_{wi} + \omega_v(x_i \sin\theta_{wi} \overline{\phantom{a}} y_i \cos\theta_{wi})$$

$$v_{wiy} = \overline{\phantom{a}}v_{ix} \sin\theta_{wi} + v_{iy} \cos\theta_{wi}$$

$$= \overline{\phantom{a}}v_{yx} \sin\theta_{wi} + v_{vy} \cos\theta_{wi} + \omega_v(x_i \cos\theta_{wi} + y_i \sin\theta_{wi}) \tag{13}$$

Here, i = 1, 2, ..., and $\theta_{wi}$ is the orientation of each driving wheel on the vehicle-based coordinates as shown in Figure 10(a).

The reference angular velocity values fed to the motors for driving the steering shafts and for driving the shafts of the driving wheels are given by the following equations (14).

$$\omega_{mwi} = (G_{w/}r)\{v_{vx} \cos\theta_{wi} + v_{vy} \sin\theta_{wi} + \omega_v(x_i \sin\theta_{wi} - y_i \cos\theta_{wi})\}$$

$$\omega_{msi} = (G_{s/}s)\{\overline{\phantom{a}}v_{vx} \sin\theta_{wi} + v_{vy} \cos\theta_{wi} + \omega_v(x_i \cos\theta_{wi} + y_i \sin\theta_{wi})\} \tag{14}$$

Here, $\omega_{mwi}$ is the angular rotating velocity of the actuator for driving the shaft of the driving wheel of the i-th driving unit,

$\omega_{msi}$ the angular rotating velocity of the actuator for driving the steering shaft of the i-th driving unit,

$v_{vx}$ the velocity of the vehicle along the x-axis,

$v_{vy}$ the velocity of the vehicle along the y-axis,

$\omega_v$ the angular rotating velocity of the vehicle around the reference point,

r the radius of the driving wheel,

s the horizontal distance between the steering shaft and the shaft of the driving wheel in the traveling direction of the driving wheel,

$x_i$ the x-axis of coordinate on the vehicle-based coordinates of the location of the steering shaft in the i-th driving unit,

$y_i$ the y-axis of coordinate on the vehicle-based coordinates of the location of the steering shaft in the i-th driving unit,

$\theta_{wi}$ the orientation of the driving wheel in the i-th driving unit on the vehicle-based coordinates,

$G_s$ the reduction gear ratio of the power transmitting means of the actuator for driving the steering shaft, and

$G_w$ the reduction gear ratio of the power transmitting means of the actuator for driving the shaft of the driving wheel.

As described above, each driving unit is able to independently determine the movement of the driving wheel thereof based on the coordinates of the center of the steering shaft thereof and using the data of the orientation thereof without considering the states of the other driving units nor using the data of the other driving wheels.

Since the above described performance is achieved by the controller of each driving unit that receives data exclusively from the controller that controls the movements of the entire vehicle, the expansion of the vehicle system is facilitated and the reliability thereof is improved. For making the vehicle exhibit the performance described above, it is necessary to provide the vehicle with two or more driving units. When the vehicle is provided with two or more driving units, there exists no limitation in the arrangements and the number of the driving units, and flexible designing of the vehicle is facilitated.

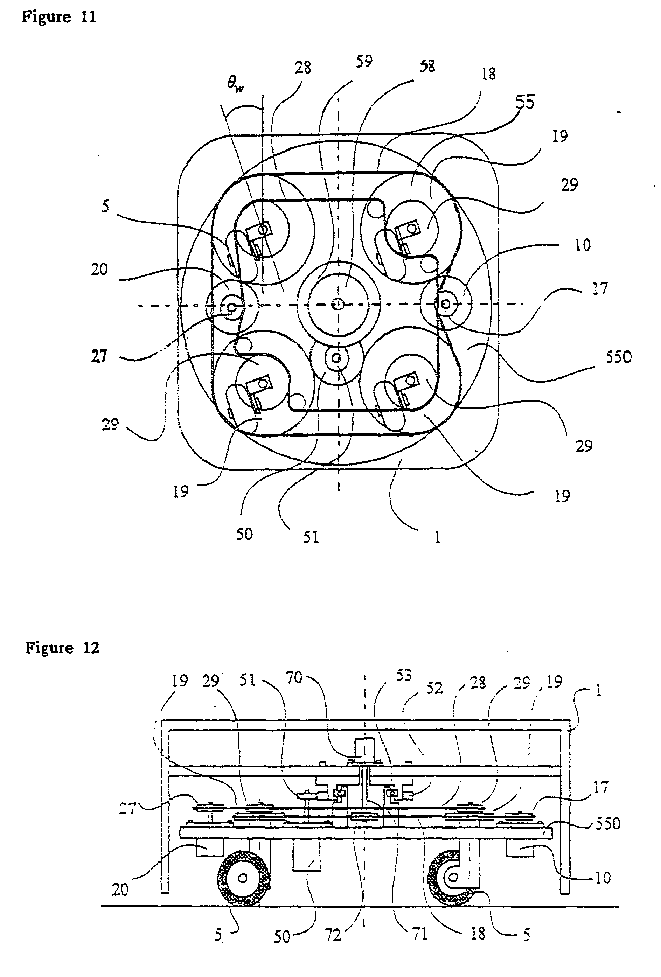

Figure 11 is a top plan view of an omnidirectional vehicle according to a sixth embodiment of the invention. Figure 12 is a side plan view of the omnidirectional vehicle of Figure 11.

Referring now to these figures, the omnidirectional vehicle according to the sixth embodiment includes a driving set 550. The driving set 550 includes a plurality of (four in Figure 11) driving units 55, therefrom the motors 10 and 20 are eliminated, as a wheel mechanism. The driving set 550 also includes pulleys 19 for driving the respective steering shafts of the wheel mechanism. The pulleys 19 are dynamically coupled with each other via a belt 18 so that all the driving wheels may orient the same direction. Pulleys 29 for driving the respective driving wheels 5 are dynamically coupled with each other via a belt 28 in the same manner as the pulleys 19.

The belt 18 that couples the pulleys 19 is driven by a motor 10 for driving the steering shafts. As a result, all the driving wheels 5 are steered simultaneously such that all the driving wheels 5 always orient the same direction. The belt 28 that couples the pulleys 29 is driven by a motor 20 for driving the shafts of the driving wheels. As a result, all the driving wheels 5 rotate and move on the ground at the same angular velocity. The driving set 550 including the wheel driving mechanisms described above is able to execute omnidirectional translational movement by controlling the above described two motors synchronously. The method of the synchronous control will be described below.

Since all the driving wheels 5 oriented in parallel to each other rotate at the same velocity when the motor 20 for driving the shafts of the driving wheels is driven, the same velocity is generated at the center of the steering shaft of each driving unit in the rolling direction of the driving wheel 5. When the motor 10 for driving the steering shafts is driven, all the driving wheels 5 change the orientations thereof simultaneously. As a result, a velocity perpendicular to the orientation of the driving wheel 5 is generated at the center of each steering shaft. The velocity vectors generated by the motor 20 for driving the shafts of the driving wheels and the velocity vectors generated by the motor 10 for driving the steering shafts are always perpendicular to each other and determined independently by controlling the speeds of the respective motors.

The driving set 550 executes a translational movement at the velocity obtained by synthesizing the velocity vectors at the centers of the steering shafts. Therefore, a synthesized velocity vector is generated in response to a control signal and the vehicle is moved on the ground to any desired direction by dissolving the velocity vector pointing to the desired direction (that is, a reference velocity vector contained in the control signal fed to the vehicle) into a vector pointing to the direction of the driving wheels 5 and a vector pointing in perpendicular to the direction of the driving wheels 5 based on the momentary orientation of the driving wheels with respect to the ground and by feeding the dissolved vectors to the respective motors 10 and 20 as the reference velocity vectors thereof continuously or intermittently at a very short interval. The translational velocity vector contained in the control signal fed to the body 1 of the vehicle is dissolved into the reference velocity vector component for the motor 10 and the reference velocity vector component for the motor 20 as described by the following equations (15).

$$\omega_{mw} = (G_w/r) \, (v_{vx} \cos\theta_w + v_{vy} \sin\theta_w)$$

$$\omega_{ms} = (G_{s}/s) (^{-} v_{vx} \sin\theta_{w} + v_{vy} \cos\theta_{w}) \tag{15}$$

Here, $v_{vx}$ is the velocity of the vehicle along the x-axis,
$v_{vy}$ the velocity of the vehicle along the y-axis,
$\omega_{mw}$ the angular rotating velocity of the actuator for driving the shafts of the driving wheels,
$\omega_{ms}$ the angular rotating velocity of the actuator for driving the steering shafts,
r the radius of the driving wheel,
s the horizontal distance between the steering shaft and the driving wheel in the traveling direction of the driving wheel,
$\theta_{w}$ the orientation of the driving wheels on the vehicle-based coordinates,
$G_{s}$ the reduction gear ratio of the power transmitting means of the actuator for driving the steering shafts, and
$G_{w}$ the reduction gear ratio of the power transmitting means of the actuator for driving the shafts of the driving wheels.

According to the algorithm described above, the driving set 550 executes a translational movement with the body 1 of the vehicle in any direction within 360 degrees of angle on the ground. Note that the orientation of the driving set 550 is fixed and never changes from the initial state thereof as far as slip is not caused between any of the driving wheels 5 and the ground. To avoid this problem, a turning stage 53 is mounted on the driving set 550. By rotating the turning stage 53, the body 1 of the vehicle is rotated. The turning stage 53 is rotated by a third motor 50. The motor 50 controls the turning velocity and the orientation of the body 1 of the vehicle fixed to the turning stage 53.

Since the driving set 550 is not turned around the vertical axis by any translational movement thereof, it is not necessary for the velocity control of the motor 50 to consider the translational movement of the vehicle. It is necessary for the motor 50 to rotate only when the turning movement of the body 1 of the vehicle is required. Therefore, the translational movement and the rotational movement of the entire body 1 of the vehicle are controlled independently without causing any interference therebetween. Based on the explanations described above, the control equations for controlling the entire vehicle are expressed by the following equations (16) by combining the equation of rotational movement with the equations of translational movement.

$$\omega_{w} = (G_{w}/r) (v_{vx} \cos\theta_{w} + v_{vy} \sin\theta_{w})$$

$$\omega_{s} = (G_{s}/s) (^{-} v_{vx} \sin\theta_{w} + v_{vy} \cos\theta_{w})$$

$$\omega_{r} = G_{r}\omega_{v} \tag{16}$$

Here, $\omega_{v}$ is the angular rotating velocity of the vehicle around the reference point,
$\omega_{r}$ the angular rotating velocity of the actuator for driving the turning shaft of the vehicle, and
$G_{r}$ the reduction gear ratio of the power transmitting means of the actuator for driving the turning shaft of the vehicle.

An omnidirectional vehicle according to a seventh embodiment of the invention will be described below with reference to Figure 12.

The driving set 550 mounts thereon a plurality of driving units, each including a driving wheel 5; motors 10, 20, and 30; belts 18 and 28 as power transmitting means for dynamically coupling the above described constituent elements; and a turning stage 53. The body 1 of the vehicle turns around the vertical axis passing the center thereof by the motor 50 via a gear 58 rotated by the motor 50 and the turning stage 53 rotated by means of the motor 50. An encoder 70 for detecting an absolute angle is fixed to the body 1 of the vehicle in such an arrangement that the rotation center thereof coincides with the rotation center of the body 1 of the vehicle. The measuring shaft [71 of the encoder 70 is rotated by the belt 18 rotated by the motor 10 via pulleys 19. Due to the arrangement described above, the encoder 70 detects the orientation of the driving wheels with respect to the body 1 of the vehicle without being affected by the state of the driving set 550.

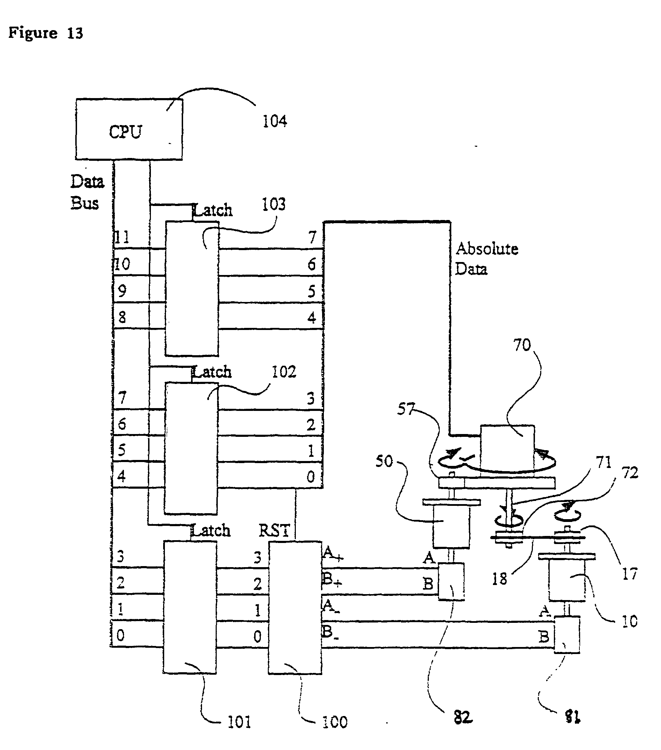

Figure 13 is a block diagram of a control system according to an eighth embodiment of the invention for controlling the omnidirectional vehicle according to the seventh embodiment.

To control the omnidirectional vehicle according to the seventh embodiment, an encoder for detecting an absolute angle or a potentiometer is used usually. Recently, encoders of digital output type have been used more often than the potentiometer due to the ease of bidirectional data exchange between the encoder and a computer and due to the ease of constructing a system immune to noises. It is required for the control system for controlling the vehicle according to the invention to detect angles with a high precision, since the velocity components of the vehicle are calculated based on the detected angle data.

The encoder that detects absolute angles using a slit with high mechanical resolution is very expensive. The encoder that realizes high resolution by using a battery or by backup of very low electric power is not preferable from the view point of maintenance. To obviate these problems, absolute angles are detected with high resolution by the combination of an encoder that detects absolute angles with relatively low resolution (hereinafter referred to as an "absolute encoder") and an integrating encoder mounted on the motor shaft. The combination of the encoders has been used to measure absolute angles with high resolution. The combination realizes high resolution of absolute angle detection by using the cumulative angle value counted by the integrating counter of the integrating encoder as a measured angle value smaller than the minimum angle that the absolute encoder is able to detect.

For example, when an 8-bit absolute encoder and a 4-bit integrating encoder are combined, the resolution of 12 bits is realized by using the 8 bits for the upper place bits and the 4-bits for the lower place bits. However, this technique is applicable only to measuring the angle of the shaft driven by one actuator.

Although it is necessary for the omnidirectional vehicle according to the invention to measure the relative angle of the body 1 of the vehicle and the driving wheel 5, the relative angle changes by rotating either one or both of the motor 10 for driving the steering shaft and the motor 50 for turning the body of the vehicle. In the system shown in Figure 13, the body of the absolute encoder 70 is rotated by the motor 50 and the measuring shaft 71 of the encoder 70 is rotated by the motor 10. In short, one shaft is driven by two motors.

Therefore, the conventional technique described above is not applicable to the omnidirectional vehicle according to the invention. To obviate this problem, the signals from integrating encodes 80 and 81 mounted on the motors 10 and 50 respectively are connected to positive and negative inputs of a counter 100 for detecting the difference between the signals (hereinafter referred to as a "differential counter"). The lowest bit in the signal from the absolute encoder 70 is connected to the differential encoder 100 such that the lowest bit resets the differential counter 100. Temporary data storage units 101 through 103, each assigned to storing each 4 bits, store the momentary state of each bit in response to the latch signal from a CPU 104. By storing the momentary state of each bit as described above, the values measured by the absolute encoder 70 and differential counter 100 are taken in synchronously.

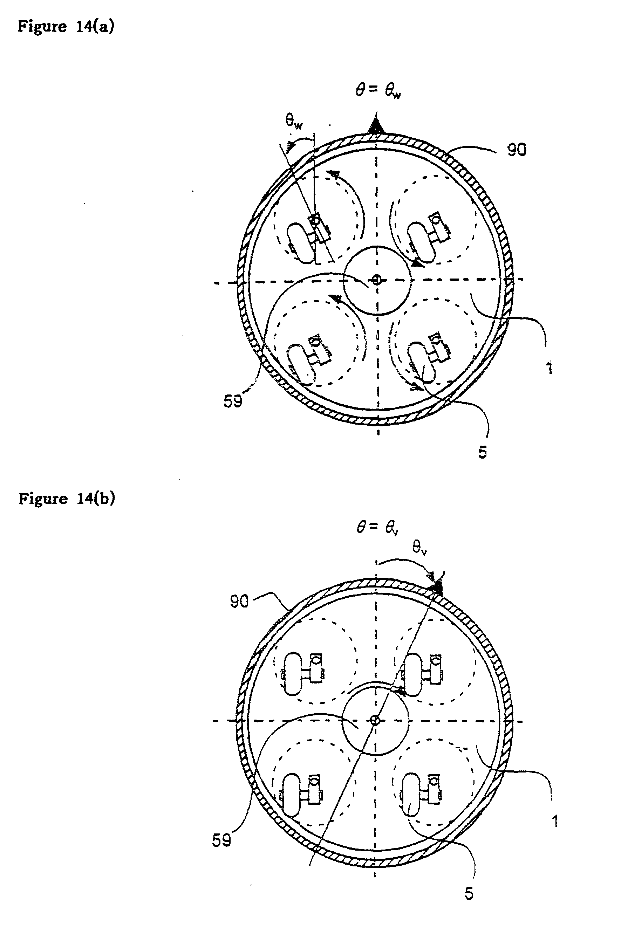

The operation of the system shown in Figure 13 will be described below. When the motor 10 for driving the steering shaft turns the driving wheels 5 anticlockwise as shown in Figure 14 (a), when the motor 50 for turning rotates an outer part 90 of the vehicle in the negative direction, or when the above described both operations are conducted, the relative angle between the outer part 90 of the vehicle and the driving wheels 5 increases. Therefore, the encoder 81 on the motor 10 is connected to the positive input of the differential counter 100 and the encoder 82 on the motor 50 to the negative input of the differential counter 100.

Due to this, the output of the differential counter 100 is equal to the positive input thereof when the driving wheels are steered anticlockwise a little bit, indicating the relative angle between the body 1 of the vehicle and the driving wheels 5. When the body 1 of the vehicle is rotated clockwise a little bit, the output of the differential counter 100 indicates an angle having an opposite sign to that of the driven angle of the body 1 of the vehicle. In this case too, the output of the differential counter 100 is equal to the relative angle between the body 1 of the vehicle and the driving wheels 5. When the driving wheels are rotated anticlockwise a little bit and the body 1 of the vehicle is rotated for the same angle, the differential counter 100 outputs a zero output as a result of the adding and subtracting calculation therein. The output indicative of zero degrees of angle coincides with the relative angle between the body 1 of the vehicle and the driving wheels 5, that is zero degrees of angle.

Since the differential counter 100 is reset when the relative angle changes largely enough to change the lowest place bit of the absolute encoder 70, the differential counter 100 stores the data of the angle change from the instance when the lowest place bit changes. That is, the differential counter 100 is able to always measure the angle smaller than the resolution of the lowest place bit of the absolute encoder 70 using the pulses from the integrating encoders 81 and 82. In Figure 13, the CPU 104 receives the upper place 8 bits from the absolute encoder 70 and the lower place 4 bits from the differential counter 100 simultaneously from the data storage units 101 through 103 and detects a momentary angle at high resolution by connecting the upper place 8 bits and the lower place 4 bits.

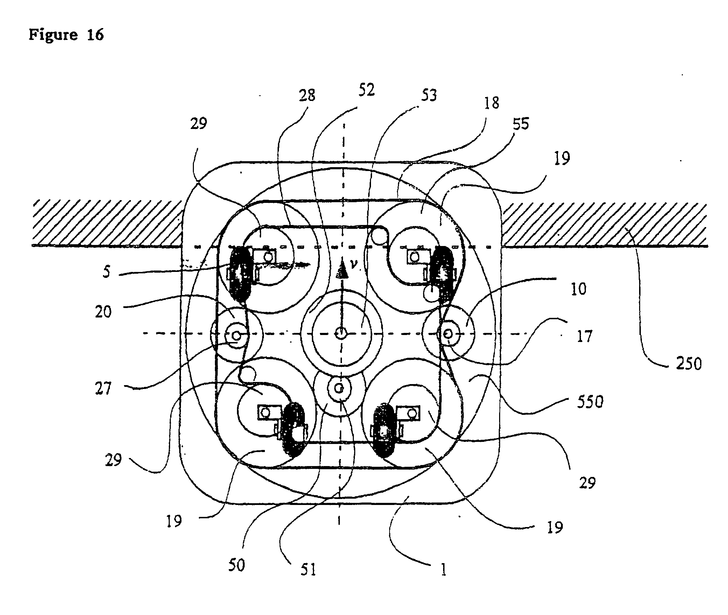

Now the omnidirectional vehicle according to a ninth embodiment of the invention will be described with reference to Figure 16. The omnidirectional vehicle according to the sixth embodiment or the seventh embodiment of the invention, that avoids interference between the velocities of the motors 10 and 20, facilitates driving the driving units collectively by the motor 10 and the motor 20 even when some driving wheels are offset to the right hand side or the left hand side and the other driving wheels are offset to the left hand side or the right hand side.

Therefore, it is possible to select a suitable orientation for each driving unit considering the location of the driving wheel on the vehicle and such factors. Now a method of arranging driving units of different orientations to avoid or moderate the torque interference between the motor 10 for driving the steering shafts and the motor 20 for driving the shafts of the driving wheels will be explained.

Figure 16 is a top plan view of an omnidirectional vehicle according to the ninth embodiment of the invention for explaining the behavior thereof. In Figure 16, some driving wheels of the vehicle moving upward on the plane of paper touch the edge of a step 250 while the vehicle is climbing up the step 250. At the moment when some driving wheels touch the edge of the step 250, large torque is caused around the steering shaft due to the moment of inertia exerted from the vehicle. At this moment, torque that rotates the steering shaft anticlockwise around the steering shaft is exerted to the driving unit on the left front, and torque that rotates the steering shaft clockwise around the steering shaft is exerted to the driving unit on the right front.

However, since the pulleys 19 for driving the respective steering shafts are coupled by the belt 18, the torque exerted to the driving unit on the left front and the torque exerted to the driving unit on the right front pulls the belt 18 in the directions opposite to each other. Since the torque exerted to the driving unit on the left front and the torque exerted to the driving unit on the right front cancel each other as an internal force exerted to the driving set 550, the torque exerted to the driving unit on the left front and the torque exerted to the driving unit on the right front are not transmitted to the motor 10 for driving the steering shafts. Therefore, when two driving wheels 5 collide against a step, the influences of the external torque turbulence caused by colliding against the step are almost removed.

When the vehicle executes omnidirectional movement, it is preferable for the driving wheel on the right front in the traveling direction and the driving wheel on the left front in the traveling direction to be different in orientation. To realize this, the driving wheels and the steering shafts are arranged such that the positional relations between the driving wheels and the steering shafts in the adjacent driving units are opposite to each other as shown in Figure 16. In other words, the driving wheels of the driving units on a diagonal line are in the same orientation. The orientation of the driving wheels on a diagonal line and the orientation of the driving wheels on the other diagonal line are different from each other.

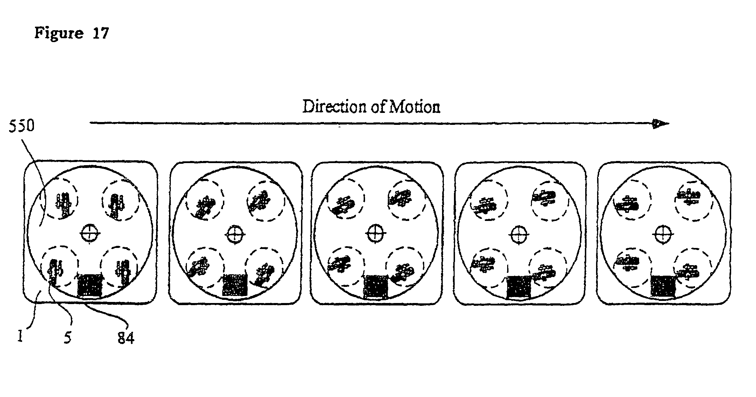

Now the omnidirectional vehicle according to a tenth embodiment of the invention will be described with reference to Figure 17. One of the specific features of the omnidirectional vehicle or the method of controlling thereof according to any of the sixth through ninth embodiments is that the driving set 550 does not rotate when the vehicle is behaving ideally, that is when any slip is not caused between the driving wheels and the perfectly flat plane. Figure 17 shows a vehicle moving perpendicular to the original pointing direction of the driving wheels. Figure 17 indicates obviously that slip is caused between the driving wheels 5 and the ground when the body 1 of the vehicle rotates around the vertical axis, that is the vehicle is not in the ideal running state.

The slip caused between the driving wheels 5 and the flat ground is detectable by a rotation sensor 84 such as a gyroscope, that measures the rotation around the vertical axis, mounted on the driving set 550. Since the driving set 550 rotates not so fast in the situation as described above, a sensor, the measurable range thereof is narrower than the conventional rotation sensor and the resolution and the sensitivity thereof are high, is used for the rotation sensor 84. The rotation sensor 84 as described above improves the angle detection precision thereby and the running precision of the vehicle.

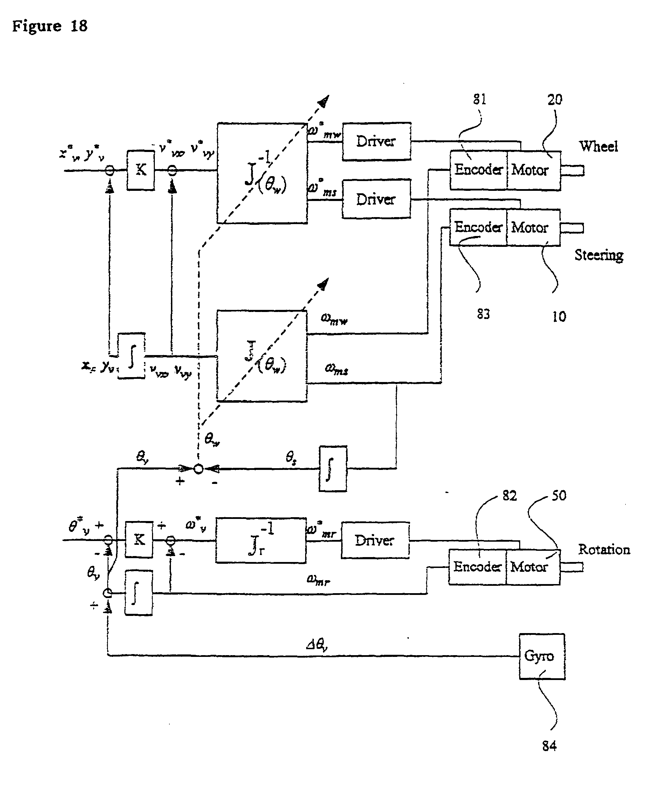

Now the omnidirectional vehicle according to an eleventh embodiment of the invention will be described with reference to Figure 18. Since the positional error of the vehicle increases with increasing traveling distance, the orientation error of the vehicle is affected greatly by the running precision thereof. Therefore, it is important to control the orientation of the vehicle very precisely.

In the omnidirectional vehicle or in the controlling method thereof according to any of the sixth through tenth embodiments, the rotation sensor 84 mounted on the driving set 550 detects only the turning of the driving set 550 irrespective of the moving state of the vehicle (irrespective of whether the vehicle is executing turning movement or translational movement). As examined above, the driving set 550 changes the orientation thereof only when slip is caused between any of the driving wheels and the ground. Therefore, it is understood that slip is caused on any of the driving wheels when the rotation sensor 84 outputs an output signal and that magnitude of the slip is proportional to the rotating speed of the driving set 550.

In Figure 18, the symbol * on the right shoulder of the parameters indicates that the pertinent parameters designate the respective reference values. Referring now to Figure 18, the estimated values of the actual position $x_v$ and $y_v$ and the actual velocity $v_{vx}$ and $v_{vy}$ are obtained by calculating the dynamic model $J(\theta_w)$ of the vehicle based on the angle data of the motors 10 and 20 fed from the encoders 83 and 81 mounted on the respective motors 10 and 20. The positional error is detected by comparing the estimated position values with the reference position values $x_v^*$ and $y_v^*$ fed to the vehicle from a not shown host controller or a not shown operating unit.

The detected positional error is treated as reference velocity values $v_{vx}^*$ and $v_{vy}^*$ and compared with the actual velocity values $v_{vx}$ and $v_{vy}$. The reference angular rotating velocities $\omega_{ms}^*$ and $\omega_{mw}^*$ of the motors 10 and 20 are determined by calculating the inverse dynamic model $J^{-1}(\theta_w)$ of the vehicle based on the velocity error obtained finally by the calculation of the feedback control described above. The motor 10 for driving the steering shaft and the motor 20 for driving the shafts of the driving wheels are controlled based on the reference angular rotating velocities of the motors 10 and 20.

The orientation of the vehicle is controlled by the motor 50 for turning the vehicle. The estimated value of the actual vehicle orientation is obtained by adding the rotation angle of the motor 50 to the initial value of orientation of the driving set 550. (In Figure 18, the initial value of orientation of the driving set 550 is set at zero.) The orientation error of the vehicle is detected by comparing the estimated value of the actual vehicle orientation with the reference orientation value $\theta_v^*$ fed from the not shown host controller or the not shown operating unit. The detected orientation error is compared with the actual angular velocity $\omega_v$ measured by the encoder 82 mounted on the motor 50 for turning the vehicle. The reference angular rotating velocity $\omega_{mr}^*$ of the motor 50 is determined by calculating the inverse dynamic model $J_r^{-1}$ of the vehicle based on the result of the comparison described above. The motor 50 for turning the vehicle is controlled based on the reference angular rotating velocity determined as described above.

The motor 10 for driving the steering shaft and the motor 20 for driving the shafts of the driving wheels are controlled and driven in combination to control the movement of the vehicle in the traveling direction thereof. The motor 50 for turning the vehicle is controlled and driven independently to control the orientation of the body of the vehicle. The dynamic model $J(\theta_w)$ and the inverse dynamic model $J^{-1}(\theta_w)$ used to calculate the traveling movements are the functions of the direction $\theta_w$ of the driving wheels with respect to the vehicle. Since an angle error is caused between the direction of the reference trajectory on the ground and the actual running direction of the vehicle when the direction $\theta_w$ of the driving wheels is inaccurate, it is necessary to measure the direction $\theta_w$ of the driving wheels with respect to the vehicle accurately.

The direction $\theta_w$ of the driving wheels is obtained by subtracting the angle $\theta_s$ of the driving wheels with respect to the driving set 550 from the orientation $\theta_v$ of the body of the vehicle. The change of the angle $\theta_s$ of the driving wheels with respect to the driving set 550 is detected accurately by the encoder 83 mounted on the motor 10 for driving the steering shaft. Since the orientation $\theta_v$ of the body of the vehicle is calculated by adding the rotation $\theta_s$ of the motor for turning the vehicle to the initial orientation of the driving set 550, the calculated orientation $\theta_v$ of the body of the vehicle is different from the actual value when a deviation is caused between the actual orientation and the initial orientation of the driving set 550.

When a deviation is caused between the momentary orientation and the initial orientation of the driving set 550, the deviation is measurable with the rotation sensor 84. By adding the output $\Delta\theta_v$ of the rotation sensor 84 simply to the estimated orientation value, the orientation error from the initial orientation of the driving set 550 from the initial orientation thereof, i.e. the orientation $\Delta\theta_v$ of the driving set 550 with respect to the ground, is obtained. The orientation $\theta_v$ of the body of the vehicle and the angle $\theta_w$ of the driving wheels with respect to the body of the vehicle are corrected based on the obtained $\Delta\theta_v$. By replacing the dynamic model $J(\theta_w)$ and the inverse dynamic model $J^{-1}(\theta_w)$ used for calculating the translational movements to the newest ones (as illustrated by the broken lines in Figure 18) at any time using the accurately corrected angle $\theta_w$ of the driving wheels with respect to the body of the vehicle, it becomes possible to predict not only the turning movement but also to control the translational movement accurately with respect to the ground or to predict the actual position of the vehicle.

As described above, the method of controlling the omnidirectional vehicle according to the invention does not need any calculation for calculating the vehicle errors from various measured values such as the rotation of the driving wheels and the steering angle, that the conventional system has needed, and completes error correction easily in a very short time.

The omnidirectional vehicle or the control method thereof according to the invention, that facilitates removing the velocity interference between the actuators for driving the vehicle, simplifies the control system and reduces the capacities of the motors for driving the shafts of the driving wheels and for driving the steering shaft. The omnidirectional vehicle or the control method thereof according to the invention, that prevents the external torque turbulence exerted to the steering shaft from being transmitted to the actuator for driving the steering shaft, facilitates reducing the capacity of the actuator for driving the steering shaft.

As a whole, a practical holonomic omnidirectional vehicle, that facilitates preventing interference from casing in the control system and the driving system, simplifying the control system and the driving system, reducing the capacities of the actuators, reducing the electric power for driving the vehicle, reducing the manufacturing costs, and realizing a high reliability and a very precise traveling capability, is obtained.

**Claims**

1. An omnidirectional vehicle comprising:

   a body (1);
   a driving unit fixed to said body (1);
   said driving unit comprising a steering shaft (13) mounted vertically through said body (1), a first actuator (10) fixed to said body (1) , said first actuator (10) driving said steering shaft (13), a driving wheel (5) including a shaft, and a second actuator (20) fixed to said body (1) , said second actuator (20) driving said shaft of said driving wheel (5);
   a bearing (2) fixed to said body (1), said bearing (2) axially supporting said steering shaft (13);

a first power transmitting means (11, 12), said first power transmitting means (11, 12) transmitting the power from said first actuator (10) to said steering shaft (13), whereby to drive said steering shaft (13);
a second power transmitting means (21, 22, 23, 24, 25, 26), said second power transmitting means (21, 22, 23, 24, 25, 26), transmitting the power from said second actuator (20) to said driving wheel (5), whereby to drive said driving wheel (5);
a supporting means (4) positioned below said steering shaft (13), said supporting means axially supporting said driving wheel (5) via a bearing,

in which a section of the second power transmitting means (23, 24, 25, 26 or 24, 25, 26) is linked to the steering shaft (13) such that the driving wheel (5) is driven when the fist actuator (10) drives said steering shaft (13) and said second actuator (20) is stopped, **characterised in that**;
a line passing through the driving wheel axis is normal to a plane passing through the vertical axis of the steering shaft (13), and said driving wheel (5) is located on said line at a point which is spaced apart from said plane by a first pre-determined distance (d), and the vertical axis of the steering shaft is located in said plane at a point which is spaced apart from said line by a second pre-determined distance (s), the pre-determined distances (d) and (s) and the first and second power transmitting means being such that when the first actuator (10) drives said steering shaft (13) and said second actuator (20) is stopped, the driving velocity of the wheel (5) is such that distances (s) and (d) are maintained so that said line passing through the shaft of the driving wheel (5) does not cross the vertical axis of the steering shaft (13).

2. The omnidirectional vehicle according to Claim 1, wherein said second power transmitting means (21, 22, 23, 24, 25, 26), comprises a first transmission section (21, 22, or 21, 22, 23) moved by said second actuator (20) independently of said steering shaft (13); and a second transmission section (23, 24, 25, 26, or 24, 25, 26) linked to said first transmission section (21, 22, or 21, 22, 23), and linked to said steering shaft (13), such that said second transmission section (23, 24, 25, 26, or 24, 25 ,26) is movable around said vertical axis of the steering shaft (13) ; said second transmission section (23, 24, 25, 26 or 24, 25, 26) having a reduction gear ration ratio G, said G, the radius r of said driving wheel (5) and said first pre-determined distance (d) being related according to the formula:

$$d = r/G$$

said G of more than 1 indicating deceleration.

3. The omnidirectional vehicle according to Claim 2, wherein said supporting means comprises a steering shaft connector (6) connected and fixed to said steering shaft (13), a gear (23) axially supported by said steering shaft connector (6), and a support link (7) axially supported on the rotation axis of said gear (23) rotatably in a vertical plane, said support link (7) axially supporting said driving wheel (5); said second transmission section (23, 24, 25, 26) including a gear (24) for driving said driving wheel (5), and being coupled to said gear (23) supported by said steering shaft connector (6), said second transmission section (23, 24, 25, 26) being moveable around said vertical axis of the steering shaft (13); and a vibration absorber (8 or 9) between said steering shaft (13) and said support link (7), for absorbing vibrations caused while said driving wheel (5) is running on the ground.

4. The omnidirectional vehicle according Claim 3, wherein said vibration absorber (8 or 9) comprises a spring; and said vehicle further comprises a linear position sensor disposed in parallel to said spring (8 or 9), said linear position sensor including a potentiometer of linear driving type, said linear position sensor measuring the deformation of said spring (8 or 9), so as to measure the vertical reactive force exerted on said driving wheel (5).

5. The omnidirectional vehicle according Claim 3, said vehicle further comprising a rotatable rod (62) inserted through the center of said steering shaft (13), said rotatable rod (62) moving up and down in response to the displacement of said vibration absorber (8 or 9) in use; and a linear position sensor (60) disposed on a portion of said vehicle not rotated by the movement of said steering shaft (13), said linear position sensor (60) including a potentiometer of linear driving type, said linear position sensor (60) measuring the displacement of said rotatable rod (62), so as to measure the deformation of said vibration absorber (8 or 9).

6. A method of controlling an omnidirectional vehicle including a plurality of the driving units described in any of Claims 1 to 5, **characterised in that** said method comprises:

defining vehicle-based-coordinates, an origin thereof being set at a reference point of said vehicle; and

controlling the angular rotating velocity of said first actuator (10) in each of said driving units and the angular rotating velocity of said second actuator (20) in each of said driving units based on the following equations;

$$\omega_{mwi} = (G_{w/}r)\{v_{vx} \cos\theta_{wi} + v_{vy} \sin\theta_{wi} + \omega_v(x_i \sin\theta wi \overline{\phantom{-}} yi \cos\theta_{wi})\};$$

$$\omega_{msi} = (G_{s/}s) \{\overline{\phantom{-}} v_{vx} \sin\theta_{wi} + v_{vy} \cos\theta_{wi} + \omega_v (x_i \cos\theta_{wi} + y_i \sin\theta_i)\};$$

wherein:

$\omega_{mwi}$ is the angular rotating velocity of said second actuator (20) for driving said shaft of said driving wheel (5) of the i-th driving unit;

$\omega_{msi}$ is the angular rotating velocity of said first actuator (10) for driving said steering shaft (13) of the i-th driving unit;

$v_{vx}$ is the velocity of said vehicle along the x-axis;

$v_{vy}$ is the velocity of said vehicle along the y-axis;

$\omega_v$ is the angular rotating velocity of said vehicle around said reference point;

r is the radius of said driving wheel (5);

s is the horizontal distance between said steering shaft (13) and said shaft of said driving wheel (5) in the traveling direction of said driving wheel (5);

$x_i$ is the x-axis of coordinate on said vehicle-based coordinates of the location of said steering shaft (13) in the i-th driving unit;

$y_i$ is the y-axis of coordinate on said vehicle-based coordinates of the location of said steering shaft (13) in the i-th driving unit;

$\theta_{wi}$ is the orientation of said driving wheel (5) in the i-th driving unit on said vehicle-based coordinates;

$G_s$ is the reduction gear ratio of said first power transmitting means (11, 12) of said first actuator (10) for driving said steering shaft (13); and

$G_w$ is the reduction gear ratio of said second power transmitting means (21, 22, 23, 24, 25, 26) of said second actuator (20) for driving said shaft of said driving wheel (5).

7. The method according to Claim 6, said method further comprising:

detecting the rotation angle around the vertical steering shaft axis passing through said vehicle by a sensor (84) disposed on said body (1) of said vehicle, said sensor (84) including a gyroscope; and

adding the detected rotation angle to the data stored so far of the orientation of said body (1) of said vehicle, so as to correct errors in the stored data of the orientation of said body (1) of said vehicle.

8. An omnidirectional vehicle comprising:

a body (1);

a driving set (550) mounted on said body (1), said driving set (550) comprising:

a plurality of driving units (55), each comprising a steering shaft (13) mounted vertically through each driving unit and a driving wheel (5) including a shaft;

a first actuator (10), said first actuator (10) driving said steering shafts (13) of said driving units (55) collectively via a first power transmitting means (17, 18, 19) including a belt (18) or a chain;

a second actuator (20), said second actuator (20) driving said driving wheels (5) of said driving units (55) via a second power transmitting means (27, 28, 29);

a bearing mounted on said driving set (550), said bearing supporting said body (1) rotatably around a vertical axis passing through said vehicle;

a third actuator (50) mounted on said driving set (550), said third actuator (50) rotating said body (1) around said vertical axis passing through said vehicle;

a third power transmitting means (51, 52), mounted on said driving set (550), said third power transmitting means (51, 52) transmitting the power from said third actuator (50);

a supporting means (4) positioned below each of said steering shafts (13), said supporting means (4) axially supporting each of said driving wheels (5) via a bearing,

in which a section of the second power transmitting means (27,28,29) is linked to the steering shafts (13) in each driving unit (55) such that the driving wheel (5) is driven when the fist actuator (10) drives said steering shafts (13) and said second actuator (20) is stopped, **characterised in that**;

in each of said driving units a line passing through the driving wheel axis is normal to a plane passing through the vertical axis of the steering shaft (13), and said driving wheel (5) is located on said line at a point which is spaced apart from said plane by a first pre-determined distance (d), and the vertical axis of the steering shaft is located in said plane at a point which is spaced apart from said line by a second pre-determined distance (s), the pre-determined distances (d) and (s) and the first and second power transmitting means being such that when the first actuator (10) drives said steering shaft (13) and said second actuator (20) is stopped, the driving velocity of the wheel (5) is such that distances (s) and (d) are maintained so that said line passing through the shaft of the driving wheel (5) does not cross the vertical axis of the steering shaft (13).

9. The omnidirectional vehicle according to Claim 8, in which four driving units (55) are provided in a square formation, and in which the driving wheels (5) in one pair of diagonally opposed driving units (55) are positioned on a first side of the steering shaft (13), and the driving wheels (5) in the other pair of diagonally opposed driving units (55) are positioned on the opposite side of the steering shaft (13), so as to relax the interference caused by external torque turbulence between said driving wheels (5) and the ground, thereon said vehicle is running.

10. A method of controlling the omnidirectional vehicle described in Claim 8 or Claim 9, **characterised in that**:

said method comprises: defining vehicle-based-coordinates, an origin thereof being set at a reference point of said vehicle; and

controlling the angular rotating velocity of said first actuator (10), the angular rotating velocity of said second actuator (20) and the angular rotating velocity of said third actuator (50) based on the following equations, whereby to control the directions and the velocities of the translational movements of said driving units (55) and said body (1) and the orientation of said body (1),

$$\omega_{mw} = (G_w/r)(v_{vx}\cos\theta_w + v_{vy}\sin\theta_w),$$

$$\omega_{ms} = (G_s/s)(\overline{\phantom{v}}v_{vx}\sin\theta_w + v_{vy}\cos\theta_w),$$

$$\omega_{mr} = G_r w_v$$

wherein:

$v_{vx}$ is the velocity of said vehicle along the x-axis,

$v_{vy}$ is the velocity of said vehicle along the y-axis,

$\omega_v$ is the angular rotating velocity of said vehicle around said reference point,

$\omega_{mw}$ is the angular rotating velocity of said second actuator (20) for driving said shafts of said driving wheels (5),

$\omega_{ms}$ is the angular rotating velocity of said first actuator (10) for driving said steering shafts (13),

$\omega_{mr}$ is the angular rotating velocity of said third actuator (50) for driving said body (1) of said vehicle,

r is the radius of said driving wheels (5),

s is the horizontal distance between each steering shaft (13) and each shaft of each driving wheel (5) in the traveling direction of each driving wheel (5),

$\theta_w$ is the orientation of said driving wheels (5) on said vehicle-based coordinates,

$G_s$ is the reduction gear ratio of said first power transmitting means (17, 18, 19) for driving said steering shafts (13),

$G_w$ is the reduction gear ratio of said second power transmitting means (27, 28, 29) for driving said shafts of said driving wheels (5), and

$G_r$ is the reduction gear ratio of said third power transmitting means (51, 52) for rotating said body (1) of said vehicle.

11. The method according to Claim 10, wherein said $\theta_w$ is measured by an angle measuring means comprising an angle detector (70) fixed to said body (1) of said vehicle, the shaft (71) of said angle detector (70) is rotated by said first power transmitting means (17,18,19) of said first actuator (10) for driving said steering shafts (13).

**12.** The method according to Claim 11, wherein said angle measuring means comprises

a first integrating encoder (81), that detects the rotation of said shaft of said first actuator (10);

a second integrating encoder (82), that detects the rotation of the shaft of said third actuator (50);

an absolute encoder (70), that detects the orientation of said driving wheels (5) with respect to said body (1) of said vehicle with a relatively low resolution; and

a differential counter (100), that counts the number of pulses contained in a first pulse train from said first integrating encoder (81) and the number of pulses contained in a second pulse train from said second integrating encoder (82);

said first pulse train indicates the normal rotation or the reverse rotation of said first actuator (10);

said first pulse train is inputted to the positive input of said differential counter (100);

said second pulse train indicates the normal rotation or the reverse rotation of said second actuator (20);

said second pulse train is inputted to the negative input of said differential counter (100);

said differential counter (100) subtracts said number of pulses contained in said second pulse train from said number of pulses contained in said first pulse train;

said differential counter (100) outputs the result of the subtraction;

said angle measuring means uses the output of said differential counter (100) for lower place bits and the output of said absolute encoder (70) for upper place bits; and

said angle measuring means connects said lower place bits and said upper place bits, whereby to obtain the measured relative angle value between the orientations of said vehicle (1) and said driving wheels (5).

**13.** The method according to any of Claims 10 to 12, said method further comprising:

detecting the slip between said driving wheels (5) and the ground based on the output of a sensor (84) disposed on said driving set (550), said sensor (84) detecting the rotation around the vertical axis of said vehicle, said sensor (84) including a gyroscope; and

correcting the measured relative angle value between the orientations of said driving wheels (5) and said body (1) of said vehicle based on the detected slip value.

**14.** The method according to any of Claims 10 to 13, said method further comprising:

detecting the rotation angle around a vertical axis passing through said vehicle by a sensor (84) disposed on said body (1) of said vehicle, said sensor (84) including a gyroscope; and

adding the detected rotation angle to the data stored so far of the orientation of said body (1) of said vehicle, so as to correct errors in the stored data of the orientation of said body (1) of said vehicle.


**Patentansprüche**

**1.** In jede Richtung fahrbares Fahrzeug umfassend:

einen Körper ( 1 );

eine an den Körper (1) befestigte Antriebseinheit;

die Antriebseinheit umfasst eine vertikal durch den Körper (1) angebrachte Lenkwelle (13), einen an dem Körper (1) befestigten ersten Aktuator (10), der erste Aktuator (10) treibt die Lenkwelle (13) an, ein eine Welle enthaltendes Antriebsrad (5), und einen an dem Körper (1) befestigten zweiten Aktuator (20), der zweite Aktuator (20) treibt die Welle des Antriebsrads (5) an;

ein an dem Körper (1) befestigtes Lager (2), das Lager (2) lagert axial die Steuerwelle (13);

ein erstes Leistungsübertragungsmittel (11, 12), das erste Leistungsübertragungsmittel (11, 12) überträgt die Leistung von dem ersten Aktuator (10) an die Lenkwelle (13), um die Lenkwelle (13) anzutreiben;

ein zweites Leistungsübertragungsmittel (21, 22, 23, 24, 25, 26), das zweite Leistungsübertragungsmittel (21, 22, 23, 24, 25, 26) überträgt die Leistung von dem zweiten Aktuator (20) an das Antriebsrad (5), um das Antriebsrad (5) anzutreiben;

ein unter der Lenkwelle (13) angeordnetes Stützmittel (4), das Stützmittel stützt axial das Antriebsrad (5) mittels eines Lagers,

bei dem ein Abschnitt des zweiten Leistungsübertragungsmittels (23, 24, 25, 26 oder 24, 25, 26) mit der Lenkwelle (13) derart verbunden ist, dass das Antriebsrad (5) angetrieben ist, wenn der erste Aktuator (10) die Lenkwelle (13) antreibt und der zweite Aktuator (20) stillgesetzt ist, **dadurch gekennzeichnet, dass** eine durch die Antriebsradachse reichende Linie senkrecht zu einer durch die vertikale Achse der Lenkwelle (13) reichenden Ebene ist, und das Antriebsrad (5) ist auf dieser Linie an einem Punkt angeordnet, der durch einen ersten vorherbestimmten Abstand (d) von dieser Ebene beabstandet ist, und die vertikale Achse der Lenkwelle ist in dieser Ebene an einem Punkt angeordnet, der um einen zweiten vorherbestimmten Abstand (s) von dieser Linie beabstandet ist, die vorherbestimmten Abstände (d) und (s) und das erste und zweite Leistungsübertragungsmittel sind so, dass, wenn der erste Aktuator (10) die Lenkwelle (13) antreibt und der zweite Aktuator (20) stillgesetzt ist, die Antriebsgeschwindigkeit des Rades (5) so ist, dass die Abstände (s) und (d) beibehalten werden, so dass die durch die Welle des Antriebsrads (5) durchreichende Linie die vertikale Achse der Lenkwelle (13) nicht schneidet.

2. In jede Richtung fahrbares Fahrzeug nach Anspruch 1, bei dem das zweite Leistungsübertragungsmittel (21, 22, 23, 24, 25, 26) umfasst eine erste Übertragungssektion (21, 22 oder 21, 22, 23), die von dem zweiten Aktuator (20) unabhängig von der Lenkwelle (13) bewegt wird; und eine zweite Übertragungssektion (23, 24, 25, 26 oder 24, 25, 26), die mit der ersten Übertragungssektion (21, 22 oder 21, 22, 23) verbunden ist und mit der Lenkwelle (13) verbunden ist, so dass die zweite Übertragungssektion (23, 24, 25, 26 oder 24, 25, 26) um die vertikale Achse der Lenkwelle (13) bewegbar ist; die zweite Übertragungssektion (23, 24, 25, 26 oder 24, 25, 26) hat ein Untersetzungsgetriebeverhältnis G, wobei G, der Radius r des Antriebsrads (5) und der erste vorherbestimmte Abstand (d) miteinander in Beziehung stehen gemäß der Formel:

$$d = r/G$$

wobei ein G von mehr als 1 eine Verzögerung kennzeichnet.

3. In jede Richtung fahrbares Fahrzeug nach Anspruch 2, bei dem das Stützmittel umfasst einen mit der Lenkwelle (13) verbundenen und daran befestigten Lenkwellenverbinder (6), ein durch den Lenkwellenverbinder (6) axial gestütztes Getriebe (23), und eine in einer vertikalen Ebene rotierbar an der Rotationsachse des Getriebes (23) axial gestützte Stützverbindung (7), die Stützverbindung (7) stützt axial das Antriebsrad (5); die zweite Übertragungssektion (23, 24, 25, 26) beinhaltet ein Getriebe (24) zum Antreiben des Antriebsrads (5), und ist an das durch den Lenkwellenverbinder (6) gestützte Getriebe (23) gekoppelt, die zweite Übertragungssektion (23, 24, 25, 26) ist um die vertikale Achse der Lenkwelle (13) bewegbar; und einen Schwingungsdämpfer (8 oder 9) zwischen der Lenkwelle (13) und der Stützverbindung (7) zum Absorbieren von Schwingungen, die verursacht werden, wenn sich das Antriebsrad (5) auf dem Grund bewegt.

4. In jede Richtung fahrbares Fahrzeug nach Anspruch 3, bei dem der Schwingungsdämpfer (8 oder 9) eine Feder umfasst; und das Fahrzeug umfasst weiter einen parallel zu der Feder (8 oder 9) angeordneten linearen Positonssensor, der lineare Positonssensor beinhaltet ein Potentiometer vom linearen Antriebstyp, der lineare Positionssensor misst die Deformation der Feder (8 oder 9), um so die auf das Antriebsrad (5) ausgeübte vertikale Gegenkraft zu messen.

5. In jede Richtung fahrbares Fahrzeug nach Anspruch 3, das Fahrzeug umfasst weiter eine durch das Zentrum der Lenkwelle (13) eingesetzte rotierbare Stange (62), die rotierbare Stange (62) bewegt sich infolge der Verschiebung des im Betrieb befindlichen Schwingungsdämpfers auf und ab; und ein linearer Positionssensor (60) ist an einem Teil des Fahrzeugs angeordnet, der nicht durch die Bewegung der Lenkwelle (13) rotiert wird, der lineare Positionssensor (60) beinhaltet ein Potentionmeter des linearen Antriebstyps, der lineare Positionssensor (60) misst die Verschiebung der rotierbaren Stange (62), um so die Deformation des Schwingungsdämpfers (8 oder 9) zu messen.

6. Ein Verfahren zum Steuern eines in jede Richtung fahrbaren Fahrzeugs enthaltend eine Vielzahl von in einem der Ansprüche 1 bis 5 beschriebenen Antriebseinheiten, **dadurch gekennzeichnet, dass** das Verfahren umfasst:

Definieren von fahrzeugbasierten Koordinaten, deren Ursprung in einen Referenzpunkt des Fahrzeugs gesetzt wird; und
Steuern der Winkeldrehgeschwindigkeit des ersten Aktuators (10) in jeder der Antriebseinheiten und der Winkeldrehgeschwindigkeit des zweiten Aktuators (20) in jeder der Antriebseinheiten basierend auf den folgenden Gleichungen;

$$\omega_{mwi} = (G_w/r) \{ v_{vx} \cos\theta_{wi} + v_{vy} \sin\theta_{wi} + \omega_v (x_i \sin\theta_{wi} - y_i \cos\theta_{wi}) \};$$

$$\omega_{msi} = (G_s/s)\{- v_{vx}\sin\theta_{wi} + v_{vy}\cos\theta_{wi} + \omega_v(x_i\cos\theta_{wi} + y_i\sin\theta_i)\};$$

wobei

$\omega_{mwi}$ ist die Winkeldrehgeschwindigkeit des zweiten Aktuators (20) zum Antreiben der Welle des Antriebsrads (5) der i-ten Antriebseinheit;

$\omega_{msi}$ ist die Winkeldrehgeschwindigkeit des ersten Aktuators (10) zum Antreiben der Lenkwelle (13) der i-ten Antriebseinheit;

$v_{vx}$ ist die Geschwindigkeit des Fahrzeugs entlang der x-Achse;

$v_{vy}$ ist die Geschwindigkeit des Fahrzeugs entlang der y-Achse;

$\omega_v$ ist die Winkeldrehgeschwindigkeit des Fahrzeugs um den Referenzpunkt;

$r$ ist der Radius des Antriebsrads (5);

$s$ ist der horizontale Abstand zwischen der Lenkwelle (13) und der Welle des Antriebsrads (5) in der Bewegungsrichtung des Antriebsrads (5);

$x_i$ ist die x-Achsenkoordinate in den fahrzeugbezogenen Koordinaten des Ortes der Lenkwelle (13) der i-ten Antriebseinheit;

$y_i$ ist die y-Achsenkoordinate in den fahrzeugbezogenen Koordinaten des Ortes der Lenkwelle (13) der i-ten Antriebseinheit;

$\theta_{wi}$ ist die Ausrichtung des Antriebsrads (5) der i-ten Antriebseinheit in den fahrzeugbezogenen Koordinaten;

$G_s$ ist das Untersetzungsgetriebeverhältnis des ersten Leistungsübertragungsmittels (11, 12) des ersten Aktuators (10) zum Antreiben der Lenkwelle (13); und

$G_w$ ist das Untersetzungsgetriebeverhältnis des zweiten Leistungsübertragungsmittels (21, 22, 23, 24, 25, 26) des zweiten Aktuators (20) zum Antreiben der Welle des Antriebsrads (5).

7. Verfahren nach Anspruch 6, das Verfahren umfasst weiter:

Erfassen des Drehwinkels um die durch das Fahrzeug durchreichende vertikale Lenkwellenachse mittels eines an dem Körper (1) des Fahrzeugs angeordneten Sensors (84), der Sensor (84) enthält ein Gyroskop; und Hinzufügen des erfassten Drehwinkels zu den bisher für die Ausrichtung des Körpers (1) des Fahrzeugs gespeicherten Daten, um Fehler in den für die Ausrichtung des Körpers (1) des Fahrzeugs gespeicherten Daten zu korrigieren.

8. In jede Richtung fahrbares Fahrzeug umfassend:

einen Körper (1);
einen auf den Körper (1) angebrachten Antriebssatz (550), der Antriebssatz (550) umfasst:

eine Vielzahl von Antriebseinheiten (55), jede umfasst eine vertikal durch jede Antriebseinheit angebrachte Lenkwelle (13) und ein eine Welle beinhaltendes Antriebsrad (5);
einen ersten Aktuator (10), der erste Aktuator (10) treibt die Lenkwellen (13) der Antriebseinheiten (55) gemeinsam mittels eines einen Riemen (18) oder eine Kette beinhaltenden ersten Leistungsübertragungsmittels (17, 18, 19) an;
einen zweiten Aktuator (20), der zweite Aktuator (20) treibt die Antriebsräder (5) der Antriebseinheiten (55) mittels eines zweiten Leistungsübertragungsmittels (27, 28, 29) an;
ein an dem Antriebssatz (550) angebrachtes Lager, das Lager lagert den Körper (1) rotierbar um eine durch das Fahrzeug durchreichende vertikale Achse;
einen an dem Antriebssatz (550) angebrachten dritten Aktuator (50), der dritte Aktuator (50) rotiert den Körper (1) um die durch das Fahrzeug durchreichende vertikale Achse;
ein an dem Antriebssatz (550) angebrachtes drittes Leistungsübertragungsmittel (51, 52), das dritte Leistungsübertragungsmittel (51, 52) überträgt die Leistung von dem dritten Aktuator (50);
ein unter jeder der Lenkwellen (13) positioniertes Stützmittel (4), das Stützmittel (4) stützt jedes der Antriebsräder (5) axial mittels eines Lagers,
bei dem ein Abschnitt des zweiten Leistungsübertragungsmittels (27, 28, 29) mit den Lenkwellen (13) in jeder Antriebseinheit (55) derart verbunden ist, dass das Antriebsrad (5) angetrieben wird, wenn der erste Aktuator (10) die Antriebswellen (13) antreibt und der zweite Aktuator (20) stillgesetzt ist, **dadurch gekennzeichnet, dass**
in jeder der Antriebseinheiten eine durch die Antriebsradachse reichende Linie senkrecht zu einer durch die vertikale Achse der Lenkwelle (13) reichenden Ebene ist, und das Antriebsrad (5) ist auf dieser Linie an einem Punkt angeordnet, der durch einen ersten vorherbestimmten Abstand (d) von dieser Ebene beabstandet ist, und die vertikale Achse der Lenkwelle ist in dieser Ebene an einem Punkt angeordnet, der um einen zweiten vorherbestimmten Abstand (s) von dieser Linie beabstandet ist, die vorherbestimmten Abstände (d) und (s) und das erste und zweite Leistungsübertragungsmittel sind so, dass, wenn der erste Aktuator (10) die Lenkwelle (13) antreibt und der zweite Aktuator (20) stillgesetzt ist, die Antriebsgeschwindigkeit des Rades (5) so ist, dass die Abstände (s) und (d) beibehalten werden, so dass die durch die Welle des Antriebsrads (5) durchreichende Linie die vertikale Achse der Lenkwelle (13) nicht schneidet.

9. In jede Richtung fahrbares Fahrzeug nach Anspruch 8, bei dem vier Antriebseinheiten (55) in einer Rechteckanordnung bereitgestellt sind, und bei dem die Antriebsräder (5) bei einem Paar von diagonal gegenüberliegenden Antriebseinheiten (55) auf einer ersten Seite der Lenkwelle (13) angeordnet sind, und die Antriebsräder (5) des anderen Paares der diagonal gegenüberliegenden Antriebseinheiten (55) auf der gegenüberliegenden Seite der Lenkwelle (13) angeordnet sind, um so die durch externe Momentenunruhen zwischen den Antriebsrädern (5) und dem Grund, auf dem das Fahrzeug sich bewegt, zu entspannen [relax].

10. Verfahren zum Steuern des in Anspruch 8 oder 9 beschriebenen in jede Richtung fahrbaren Fahrzeugs, **dadurch gekennzeichnet, dass**: das Verfahren umfasst:

Definieren von fahrzeugbezogenen Koordinaten, deren Ursprung auf einen Referenzpunkt an dem Fahrzeug gesetzt wird; und
Steuern der Winkeldrehgeschwindigkeit des ersten Aktuators (10), der Winkeldrehgeschwindigkeit des zweiten Aktuators (20) und die Winkeldrehgeschwindigkeit des dritten Aktuators (50) basierend auf den folgenden Gleichungen, um so die Richtungen und die Geschwindigkeiten der translationalen Bewegungen der Antriebseinheiten (55) und des Körpers (1) und die Ausrichtung des Körpers ( 1 ) zu steuern;

$$\omega_{mw} = (G_w/r)\,(\,v_{vx}\cos\theta_w + v_{vy}\sin\theta_w),$$

$$\omega_{ms} = (G_s/s)\,(-v_{vx}\sin\theta_w + v_{vy}\cos\theta_w),$$

$$\omega_{mr} = G_r\,\omega_v$$

wobei
$v_{vx}$ ist die Geschwindigkeit des Fahrzeugs entlang der x-Achse;
$v_{vy}$ ist die Geschwindigkeit des Fahrzeugs entlang der y-Achse;
$\omega_v$ ist die Winkeldrehgeschwindigkeit des Fahrzeugs um den Referenzpunkt;
$\omega_{mw}$ ist die Winkeldrehgeschwindigkeit des zweiten Aktuators (20) zum Antreiben der Welle des Antriebsrads (5);
$\omega_{ms}$ ist die Winkeldrehgeschwindigkeit des ersten Aktuators (10) zum Antreiben der Lenkwelle (13);
$\omega_{mr}$ ist die Winkeldrehgeschwindigkeit des dritten Aktuators (50) zum Antreiben des Körpers (1) des Fahrzeugs;
r ist der Radius der Antriebsräder(5);
s ist der horizontale Abstand zwischen jeder Lenkwelle (13) und jeder Welle jedes Antriebsrads (5) in der Bewegungsrichtung jedes Antriebsrads (5);
$\theta_w$ ist die Ausrichtung der Antriebsräder (5) in den fahrzeugbezogenen Koordinaten;
$G_s$ ist das Untersetzungsgetriebeverhältnis des ersten Leistungsübertragungsmittels (17, 18, 19) zum Antreiben der Lenkwelle (13),
$G_w$ ist das Untersetzungsgetriebeverhältnis des zweiten Leistungsübertragungsmittels (27, 28, 29) zum Antreiben der Wellen der Antriebsräder (5), und
$G_r$ ist das Untersetzungsgetriebeverhältnis des dritten Leistungsübertragungsmittels (51, 52) zum Rotieren des Körpers (1) des Fahrzeugs.

11. Verfahren nach Anspruch 10, wobei $\theta_w$ durch ein Winkelmessmittel gemessen wird, welches einen an dem Körper (1) des Fahrzeugs befestigten Winkeldetektor (70) umfasst, die Welle (71) des Winkeldetektors (70) wird durch das erste Leistungsübertragungsmittel (17, 18, 19) des ersten Aktuators (10) zum Antreiben der Lenkwelle (13) rotiert.

12. Verfahren nach Anspruch 11, wobei das Winkelmessmittel umfasst

einen ersten integrierenden Encoder (81), der die Rotation der Welle des ersten Aktuators (10) erfasst;

einen zweiten integrierenden Encoder (82), der die Rotation der Welle des zweiten Aktuators (50) erfasst;

einen Absolutencoder (70), der die Ausrichtung des Antriebsrads (5) in Bezug auf den Körper (1) des Fahrzeugs mit einer relativ geringen Auflösung erfasst; und

einen Diferenatialzähler (100), der die Anzahl der in einer ersten Impulsfolge von dem ersten integrierenden Encoder (81) enthaltenen Impulse und die Anzahl der in einer zweiten Impulsfolge von dem zweiten integrierenden Encoder (82) enthaltenen Impulse zählt;

die erste Impulsfolge kennzeichnet die normale Rotation oder die rückwärtige Rotation des ersten Aktuators (10);

die erste Impulsfolge wird in den positiven Eingang des Differentialzählers (100) eingegeben;

die zweite Impulsfolge kennzeichnet die normale Rotation oder die rückwärtige Rotation des zweiten Aktuators (20);

die zweite Impulsfolge wird in den negativen Eingang des Differentialzählers (100) eingegeben;

der Differentialzähler (100) substrahiert die Anzahl der in der zweiten Impulsfolge enthaltenen Impulse von der Anzahl der in der ersten Impulsfolge enthaltenen Impulse;

der Differentialzähler (100) gibt das Resultat der Subtraktion aus;

das Winkelmessmittel benutzt den Ausgang des Differentialzählers (100) für niederwertigere Bits und den Ausgang des Absolutencoders (70) für höherwertigere Bits; und

das Winkelmessmittel verbindet die niederwertigeren Bits und die höherwertigeren Bits, um den gemessenen relativen Winkelwert zwischen der Ausrichtung des Fahrzeugs (1) und den Antriebsrädern (5) zu erhalten.

13. Verfahren nach einem der Ansprüche 10 bis 12, das Verfahren umfasst weiter:

Erfassen des Schlupfs zwischen den Antriebsrädern (5) und dem Grund basierend auf dem Ausgang eines an dem Antriebssatz (550) angeordneten Sensors (84), der Sensor (84) erfasst die Rotation um die vertikale Achse des Fahrzeugs, der Sensor (84) enthält ein Gyroskop; und

Korrigieren des gemessenen relativen Winkelwerts zwischen der Ausrichtung der Antriebsräder (5) und dem Körper (1) des Fahrzeugs basierend auf dem erfassten Schlupfwert;

14. Verfahren nach einem der Ansprüche 10 bis 13, das Verfahren umfasst weiter:

Erfassen des Drehwinkels um eine durch das Fahrzeug hindurchreichende vertikale Achse durch einen an dem Körper (1) des Fahrzeugs angeordneten Sensor (84), der Sensor (84) enthält ein Gyroskop; und

Hinzufügen des erfassten Drehwinkels zu den bisher für die Ausrichtung des Körpers (1) des Fahrzeugs gespeicherten Daten, um Fehler in den für die Ausrichtung des Körpers (1) des Fahrzeugs gespeicherten Daten zu korrigieren.

**Revendications**

1. Véhicule omnidirectionnel comprenant :

un corps (1) ;

un système d'entraînement fixé audit corps (1) ;

ledit système d'entraînement comprenant un arbre de direction (13) monté verticalement à travers ledit corps (1), un premier actionneur (10) fixé audit corps (1), ledit premier actionneur (10) entraînant ledit arbre de direction (13), une roue motrice (5) comportant un arbre, et un deuxième actionneur (20) fixé audit corps (1), ledit deuxième actionneur (20) entraînant ledit arbre de ladite roue motrice (5) ;

un roulement (2) fixé audit corps (1), ledit roulement (2) supportant axialement ledit arbre de direction (13) ;

un premier moyen de transmission de puissance (11, 12), ledit premier moyen de transmission de puissance (11, 12) transmettant la puissance dudit premier actionneur (10) audit arbre de direction (13) pour ainsi entraîner ledit arbre de direction (13) ;

un deuxième moyen de transmission de puissance (21, 22, 23, 24, 25, 26), ledit deuxième moyen de transmission de puissance (21, 22, 23, 24, 25, 26) transmettant la puissance dudit deuxième actionneur (20) à ladite roue motrice (5), pour ainsi entraîner ladite roue motrice (5) ;

un moyen de support (4) placé sous ledit arbre de direction (13), ledit moyen de support supportant axialement ladite roue motrice (5) par l'intermédiaire d'un roulement,
une partie du deuxième moyen de transmission de puissance (23, 24, 25, 26 ou 24, 25, 26) est accouplée avec l'arbre de direction (13) de façon que la roue motrice (5) soit entraînée lorsque le premier actionneur (10) entraîne ledit arbre de direction (13) et que ledit deuxième actionneur (20) est à l'arrêt, **caractérisé en ce que**
une ligne passant par l'axe de la roue motrice est perpendiculaire à un plan passant par l'axe vertical de l'arbre de direction (13), et ladite roue motrice (5) est située sur ladite ligne en un point espacé dudit plan par une première distance prédéterminée (d), et l'axe vertical de l'arbre de direction se trouve sur ladite ligne en un point espacé de ladite ligne par une deuxième distance prédéterminée (s), les distances prédéterminées (d) et (s) et les premier et deuxième moyens de transmission de puissance étant tels que , lorsque le premier actionneur (10) entraîne ledit arbre de direction (13) et que ledit deuxième actionneur (20) est à l'arrêt, la vitesse d'entraînement de la roue (5) est telle que les distances (s) et (d) sont maintenues de telle manière que la ladite ligne passant par l'arbre de la roue motrice (5) ne croise pas l'axe vertical de l'arbre de direction (13).

2. Véhicule omnidirectionnel selon la revendication 1, dans lequel ledit deuxième moyen de transmission de puissance (21, 22, 23, 24, 25, 26) comprend une première section de transmission (21, 22 ou 21, 22, 23) mue par ledit deuxième actionneur (20) indépendamment dudit arbre de direction (13) ; et une deuxième section de transmission (23, 24, 25, 26 ou 24, 25, 26) accouplée avec ladite première section de transmission (21, 22 ou 21, 22, 23) et accouplée avec ledit arbre de direction (13) de telle sorte que ladite deuxième section de transmission (23, 24, 25, 26 ou 24, 25, 26) peut se déplacer autour dudit axe vertical de l'arbre de direction (13) ; ladite deuxième section de transmission (23, 24, 25, 26 ou 24, 25, 26) ayant un rapport de démultiplication G, ledit rapport G, le rayon r de ladite roue motrice (5) et ladite première distance prédéterminée (d) étant liés suivant la formule :

$$d = r/G$$

une valeur dudit rapport G supérieure à 1 indiquant un ralentissement.

3. Véhicule omnidirectionnel selon la revendication 2, dans lequel ledit moyen de support comprend un connecteur (6) d'arbre de direction connecté et fixé audit arbre de direction (13), un pignon (23) supporté axialement par ledit connecteur (6) d'arbre de direction, et un support de liaison (7) supporté axialement sur l'arbre de rotation dudit pignon (23) de façon à pouvoir tourner dans un plan vertical, ledit support de liaison (7) supportant axialement ladite roue motrice (5) ; ladite deuxième section de transmission (23, 24, 25, 26) comportant un pignon (24) pour entraîner ladite roue motrice (5) et étant accouplée avec ledit pignon (23) supporté par ledit connecteur (6) d'arbre de direction, ladite deuxième section de transmission (23, 24, 25, 26) étant mobile autour dudit axe vertical de l'arbre de direction (13) ; et un amortisseur de vibrations (8 ou 9) entre ledit arbre de direction (13) et ledit support de liaison (7) pour amortir les vibrations provoquées pendant que ladite roue motrice (5) roule au sol.

4. Véhicule omnidirectionnel selon la revendication 3, dans lequel ledit amortisseur de vibrations (8 ou 9) comprend un ressort ; et ledit véhicule comprend en outre un capteur de position linéaire disposé parallèlement audit ressort (8 ou 9), ledit capteur de position linéaire comportant un potentiomètre du type à entraînement linéaire, ledit capteur de position linéaire mesurant la déformation dudit ressort (8 ou 9) afin de mesurer la force de réaction verticale exercée sur ladite roue motrice (5).

5. Véhicule omnidirectionnel selon la revendication 3, ledit véhicule comprenant en outre une tige rotative (62) insérée à travers le centre dudit arbre de direction (13), ladite tige rotative (62) s'élevant et s'abaissant en réponse au déplacement dudit amortisseur de vibrations (8 ou 9) lors de l'utilisation ; et un capteur de position linéaire (60) disposé sur une partie dudit véhicule ne tournant pas sous l'effet du mouvement dudit arbre de direction (13), ledit capteur (60) de position linéaire comportant un potentiomètre du type à entraînement linéaire, ledit capteur (60) de position linéaire mesurant le déplacement de ladite tige rotative (62) afin de mesurer la déformation dudit amortisseur de vibrations (8 ou 9).

6. Procédé de commande d'un véhicule omnidirectionnel comprenant une pluralité de systèmes d'entraînement décrits dans l'une quelconque des revendications 1 à 6, **caractérisé en ce que** ledit procédé comprend les étapes consistant à :

définir des coordonnées à partir du véhicule, une origine de celles-ci étant établie comme point de référence dudit véhicule ; et

commander la vitesse angulaire de rotation dudit premier actionneur (10) présent dans chacun desdits systèmes d'entraînement et la vitesse angulaire de rotation dudit deuxième actionneur (20) dans chacun desdits systèmes d'entraînement conformément aux équations suivantes :

$$\omega_{mwi} = (G_w/r) \{ v_{vx} \cos\theta_{wi} + v_{vy} \sin\theta_{wi} + \omega_v (x_i \sin\theta_{wi}$$

$$\bar{} y_i \cos\theta_{wi}) \} ;$$

$$\omega_{msi} = (G_s/s) \{ \bar{} v_{vx} \sin\theta_{wi} + v_{vy} \cos\theta_{wi} + \omega_v (x_i \cos\theta_{wi}$$

$$+ y_i \sin\theta_i) \} ;$$

où :

$\omega_{mwi}$ est la vitesse angulaire de rotation dudit deuxième actionneur (20) pour entraîner ledit arbre de ladite roue motrice (5) du i-ème système d'entraînement ;
$\omega_{msi}$ désigne la vitesse angulaire de rotation dudit premier actionneur (10) pour entraîner ledit arbre de direction (13) du i-ème système d'entraînement ;
$v_{vx}$ désigne la vitesse dudit véhicule sur l'axe x ;
$v_{vy}$ désigne la vitesse dudit véhicule sur l'axe y ;
$\omega_v$ désigne la vitesse annulaire de rotation dudit véhicule autour dudit point de référence ;
r désigne le rayon de ladite roue d'entraînement (5) ;
s désigne la distance horizontale entre ledit arbre de direction (13) et ledit arbre de ladite roue motrice (5) dans la direction de circulation de ladite roue motrice (5) ;
$x_i$ désigne l'axe x de coordonnée sur lesdites coordonnées d'après le véhicule de l'emplacement dudit arbre de direction (13) dans le i-ème système d'entraînement ;
$y_i$ est l'axe y de coordonnée sur lesdites coordonnées d'après le véhicule de l'emplacement dudit arbre de direction (13) dans le i-ème système d'entraînement ;
$\theta_{wi}$ désigne l'orientation de ladite roue motrice (5) dans le i-ème système d'entraînement sur lesdites coordonnées d'après le véhicule ;
$G_s$ est le rapport de démultiplication dudit premier moyen de transmission de puissance (11, 12) dudit premier actionneur (10) pour entraîner ledit arbre de direction (13) ; et
$G_w$ désigne le rapport de démultiplication dudit deuxième moyen de transmission de puissance (21, 22, 23, 24, 25, 26) dudit deuxième actionneur (20) pour entraîner ledit arbre de ladite roue motrice (5).

**7.** Procédé selon la revendication 6, ledit procédé comprenant en outre les étapes consistant à :

détecter l'angle de rotation autour de l'axe vertical de l'arbre de direction passant par ledit véhicule, par un capteur (84) disposé sur ledit corps (1) dudit véhicule, ledit capteur (84) comportant un gyroscope ; et
ajouter l'angle de rotation détecté aux données stockées jusqu'à présent, concernant l'orientation dudit corps (1) dudit véhicule, afin de corriger des erreurs dans les données stockées sur l'orientation dudit corps (1) dudit véhicule.

**8.** Véhicule omnidirectionnel comprenant :

un corps (1) ;
un ensemble d'entraînement (550) monté sur ledit corps (1), ledit ensemble d'entraînement (550) comprenant :
une pluralité de systèmes d'entraînement (55), comprenant chacun un arbre d'entraînement (13) monté verticalement à travers chaque système d'entraînement et une roue motrice (5) comportant un arbre ;
un premier actionneur (10), ledit premier actionneur (10) entraînant collectivement lesdits arbres de direction (13) desdits systèmes d'entraînement (55) par l'intermédiaire d'un premier moyen de transmission de puissance (17, 18, 19) comportant une courroie (18) ou une chaîne ;
un deuxième actionneur (20), ledit deuxième actionneur (20) entraînant lesdites roues motrices (5) desdits systèmes d'entraînement (55) par l'intermédiaire d'un deuxième moyen de transmission de puissance (27, 28, 29) ;

un roulement monté sur ledit ensemble d'entraînement (550), ledit roulement supportant ledit corps (1) de manière rotative autour d'un axe vertical passant par ledit véhicule ;

un troisième actionneur (50) monté sur ledit ensemble d'entraînement 550), ledit troisième actionneur (50) faisant tourner ledit corps (1) autour dudit axe vertical passant par ledit véhicule ;

un troisième moyen de transmission de puissance (51, 52) monté sur ledit ensemble d'entraînement (550), ledit troisième moyen de transmission de puissance (51, 52) transmettant la puissance à partir dudit troisième actionneur (50) ;

un moyen de support (4) placé sous chacun desdits arbres de direction (13), ledit moyen de support (4) supportant axialement chacune desdites roues motrices (5) par l'intermédiaire d'un roulement,

une section du deuxième moyen de transmission de puissance (27, 28, 29) étant liée aux arbres de direction (13) de chaque système d'entraînement (55) de façon que la roue motrice (5) soit entraînée lorsque le premier actionneur (10) entraîne lesdits arbres de direction (13) et que ledit deuxième actionneur (20) est à l'arrêt, **caractérisé en ce que** :

dans chacun desdits systèmes d'entraînement, une ligne passant par l'axe de la roue d'entraînement est perpendiculaire à un plan passant par l'axe vertical de l'arbre de direction (13), et ladite roue motrice (5) est située sur ladite ligne en un point espacé par rapport audit plan d'une première distance prédéterminée (d), et l'axe vertical de l'arbre de direction est situé dans ledit plan en un point espacé par rapport à ladite ligne d'une deuxième distance prédéterminée (s), les distances prédéterminées (d) et (s) et les premier et deuxième moyens de transmission de puissance étant tels que, lorsque le premier actionneur (10) entraîne ledit arbre de direction (13) et que ledit deuxième actionneur (20) est à l'arrêt, la vitesse d'entraînement de la roue (5) est telle que les distance (s) et (d) sont maintenues de façon que ladite ligne passant par l'arbre de la roue motrice (5) ne croise pas l'axe vertical de l'arbre de direction (13).

9. Véhicule omnidirectionnel selon la revendication 8, dans lequel quatre systèmes d'entraînement (55) sont disposés suivant une configuration en carré, et dans lequel les roues motrices (5) d'une même paire de systèmes d'entraînement (55) opposés en diagonale sont placées sur un premier côté de l'arbre de direction (13) et les roues motrices (5) de l'autre paire de systèmes d'entraînement (13) opposés en diagonale sont disposées sur le côté opposé de l'arbre de direction (13) de façon à atténuer l'interférence provoquée par la turbulence du couple extérieur entre lesdites roues d'entraînement (5) et le sol sur lequel roule ledit véhicule.

10. Procédé de commande du véhicule omnidirectionnel décrit dans la revendication 8 ou la revendication 9, **caractérisé en ce que** :

ledit procédé comprend les étapes consistant à :

définir des coordonnées d'après le véhicule, une origine de celles-ci étant établie comme point de référence dudit véhicule ; et

commander la vitesse angulaire de rotation dudit premier actionneur (10), la vitesse angulaire de rotation dudit deuxième actionneur (20) et la vitesse angulaire de rotation dudit troisième actionneur (50) conformément aux équations ci-dessous, pour ainsi commander les directions et les vitesses des mouvements de translation desdits systèmes d'entraînement (55) et dudit corps (1) et l'orientation dudit corps (1),

$$\omega_{mw} = (G_w/r)\,(v_{vx}\cos\theta_w + v_{vy}\sin\theta_{w)}\ ;$$

$$\omega_{ms} = (G_s/s)\,\{^-v_{vx}\sin\theta_w + v_{vy}\cos\theta_w),$$

$$\omega_{mr} = G_r W_v$$

où :

$v_{vx}$ désigne la vitesse dudit véhicule sur l'axe x,
$v_{vy}$ désigne la vitesse dudit véhicule sur l'axe y,
$\omega_v$ désigne la vitesse angulaire de rotation dudit véhicule autour dudit point de référence,

$\omega_{mw}$ désigne la vitesse angulaire de rotation dudit deuxième actionneur (20) pour entraîner lesdits arbres desdites roues motrices (5),

$\omega_{ms}$ désigne la vitesse angulaire de rotation dudit premier actionneur (10) pour entraîner lesdits arbres de direction (13),

$\omega_{mr}$ désigne la vitesse angulaire de rotation dudit troisième actionneur (50) pour entraîner ledit corps (1) dudit véhicule,

r désigne le rayon desdites roues motrices (5),

s désigne la distance horizontale entre chaque arbre de direction (13) et chaque arbre de chaque roue motrice (5) dans la direction de circulation de chaque roue motrice (5),

$\theta_w$ désigne l'orientation desdites roues motrices (5) sur lesdites coordonnées d'après le véhicule,

$G_s$ désigne le rapport de démultiplication dudit premier moyen de transmission de puissance (17, 18, 19) pour entraîner lesdits arbres de direction (13),

$G_w$ désigne le rapport de démultiplication dudit deuxième moyen de transmission de puissance (27, 28, 29) pour entraîner lesdits arbres desdites roues motrices (5), et

$G_r$ désigne le rapport de démultiplication dudit troisième moyen de transmission de puissance (51, 52) pour faire tourner ledit corps (1) dudit véhicule.

**11.** Procédé selon la revendication 10, dans lequel ladite orientation $\theta_w$ est mesurée par un moyen de mesure d'angle comportant un détecteur d'angle (70) fixé audit corps (1) dudit véhicule, l'arbre (71) dudit détecteur (70) d'angle tournant sous l'action dudit premier moyen de transmission de puissance (17, 18, 19) dudit premier actionneur (10) pour entraîner lesdits arbres de direction (13).

**12.** Procédé selon la revendication 11, dans lequel ledit moyen de mesure d'angle comprend

un premier codeur intégrateur (81), qui détecte la rotation dudit arbre dudit premier actionneur (10) ;

un deuxième codeur intégrateur (82), qui détecte la rotation de l'arbre dudit troisième actionneur (50) ;

un codeur absolu (70) qui détecte l'orientation desdites roues motrices (5) par rapport audit corps (1) dudit véhicule avec une résolution relativement basse ; et

un compteur différentiel (100), qui compte le nombre d'impulsions contenues dans un premier train d'impulsions venant dudit premier codeur intégrateur (81) et le nombre d'impulsions contenues dans un deuxième train d'impulsions venant dudit deuxième codeur intégrateur (82) ;

ledit premier train d'impulsions indique la rotation normale ou la rotation en marche arrière dudit premier actionneur (10) ;

ledit premier train d'impulsions est appliqué à l'entrée positive dudit compteur différentiel (100) ;

ledit deuxième train d'impulsions indique la rotation normale ou la rotation en marche arrière dudit deuxième actionneur (20) ;

ledit deuxième train d'impulsions est appliqué à l'entrée négative dudit compteur différentiel (100) ;

ledit compteur différentiel (100) soustrait ledit nombre d'impulsions contenues dans ledit deuxième train d'impulsions dudit nombre d'impulsions contenues dans ledit premier train d'impulsions ;

ledit compteur différentiel (100) délivre le résultat de la soustraction ;

ledit moyen de mesure d'angle utilise le signal de sortie dudit compteur différentiel (100) pour des bits de poids faible et le signal de sortie dudit codeur absolu (70) pour les bits de poids fort ; et

ledit moyen de mesure d'angle connecte lesdits bits de poids faible et lesdits bits de poids fort pour ainsi obtenir la valeur relative d'angle mesurée entre les orientations dudit véhicule (1) et desdites roues motrices (5).

**13.** Procédé selon l'une quelconque des revendications 10 à 12, ledit procédé comprenant en outre les étapes consistant à :

détecter le patinage entre lesdites roues motrices (5) et le sol d'après le signal de sortie d'un capteur (84) disposé sur ledit ensemble d'entraînement (550), ledit capteur (84) détectant la rotation autour de l'axe vertical dudit véhicule, ledit capteur (84) comportant un gyroscope ; et

corriger la valeur relative d'angle mesurée entre les orientations desdites roues motrices (5) et ledit corps (1) dudit véhicule d'après la valeur de patinage détectée.

**14.** Procédé selon l'une quelconque des revendications 10 à 13, ledit procédé comprenant en outre les étapes consistant à :

détecter l'angle de rotation autour d'un axe vertical passant par ledit véhicule à l'aide d'un capteur (84) disposé sur ledit corps (1) dudit véhicule, ledit capteur (84) comportant un gyroscope ; et

ajouter l'angle de rotation détecté aux données mémorisées précédemment quant à l'orientation dudit corps (1) dudit véhicule afin de corriger des erreurs dans les données stockées sur l'orientation dudit corps (1) dudit véhicule.

Figure 1

Figure 2

Figure 3

Figure 4

Figure 5

O

O'

$\theta_s$

5

d

s

$a = r\,\theta_w$

P

Figure 6

13    22    55    10

20

21    11

1

2

6    9    12

8    7

25

26    24

23

5

# Figure 7

Figure 8

Figure 9(a)

Figure 9(b)

Figure 9(c)

Figure 10(a)

Figure 10(b)

Figure 11

Figure 12

**Figure 13**

Figure 14(a)

Figure 14(b)

Figure 15

Figure 16

Figure 17

Figure 18

**Figure 19**

**Figure 20**

Figure 21

Figure 22

Figure 23

Figure 24